# EUROPEAN PATENT APPLICATION

(11) **EP 3 372 870 A1**
(43) Date of publication of application: **12.09.2018**
(21) Application number: 17756695.7
(22) Date of filing: 27.02.2017
(51) Int. Cl.: F16H 61/00

(54) **HYDRAULIC CONTROL DEVICE FOR TRANSMISSION DEVICE FOR VEHICLE**

(30) Priority: 25.02.2016 JP 2016034099
(71) Applicant: Aisin Aw Co., Ltd., Anjo-shi, Aichi 444-1192 (JP)
(72) Inventor: KIDOKORO, Eikichi, Anjo-shi Aichi 444-1192 (JP); MATSUYAMA, Kaname, Anjo-shi Aichi 444-1192 (JP)
(74) Representative: TBK
(86) International application number: PCT/JP2017/007579
(87) International publication number: WO 2017/146261

(57) **Abstract**

A hydraulic control device includes a first communication oil passage (96) that extends from a first port (66a) toward the outer side in the radial direction of a spool (66p), and a first oil passage (86) that has an opening portion (96b) that communicates with the first communication oil passage (96). The first oil passage (86) is an oil passage that is formed by joining two body portions (61, 62) that have respective grooves (617a, 629a) to each other such that the grooves (617a, 629a) are aligned with each other on a stacked surface (617, 629) on which the body portions (61, 62) are stacked on each other, and that communicates with the first communication oil passage (96). An oil passage width (W1, W2) of the first oil passage (86) is gradually increased from the opening portion (96b) toward the stacked surface (617, 629) in a sectional surface that is orthogonal to the center axis of the first oil passage (86) at the opening portion (96b).

## Description

### TECHNICAL FIELD

The present invention relates to a hydraulic control device for a vehicle power transfer device to be mounted on a vehicle, for example.

### BACKGROUND ART

Hydraulic control devices for a vehicle power transfer device, e.g. an automatic transmission, that include a valve body that has a plurality of various valves such as linear solenoid valves and switching valves (hereinafter referred to simply as "valves") and oil passages that allow communication between such valves have conventionally been widespread. Many valve bodies are made of metal such as die-cast aluminum, and formed by stacking several bodies in a plate shape and fastening such bodies using bolts. In addition, there have been known valve bodies in which oil passages in a groove shape are formed in stacked bodies, for example, the oil passages each have a rectangular cross-sectional shape, and the oil passages are separated from each other by a partition wall in a flat plate shape that is thin compared to the width of the oil passages (see Patent Document 1).

In recent years, there have been developed valve bodies in which several blocks, which are made of a synthetic resin and in which half oil passages are formed by injection molding, are stacked on each other and integrated with each other by welding etc. to form a single valve body (see Patent Document 2). It is also conceivable to form oil passages in a rectangular cross-sectional shape such as those discussed above in such valve bodies which are made of a synthetic resin.

### [Related Art Documents]

### [Patent Documents]

[Patent Document 1] Japanese Patent Application Publication No. 2013-253653 (JP 2013-253653 A)
[Patent Document 2] Japanese Patent Application Publication No. 2012-82917 (JP 2012-82917 A)

### SUMMARY OF THE INVENTION

### [Problem to be Solved by the Invention]

In the case where the valve body which is made of a synthetic resin discussed above is provided with oil passages in a rectangular cross-sectional shape, however, the oil passages are separated by a thin partition wall in a flat plate shape. Thus, the rigidity is not sufficient for a hydraulic pressure since the rigidity of a synthetic resin is lower than the rigidity of metal, and the partition wall may be pushed toward the outer side of the oil passage by a hydraulic pressure in the oil passage. That is, the partition wall with a low rigidity and made of a synthetic resin extends linearly and orthogonally to the center line direction of the valve, and therefore the partition wall receives the hydraulic pressure over the entire surface, and may easily fall over.

Thus, it is an object to provide a hydraulic control device for a vehicle power transfer device that can improve the rigidity of a partition wall between oil passages against a hydraulic pressure even if a valve body is made of a synthetic resin.

### [Means for Solving the Problem]

The present disclosure provides a hydraulic control device for a vehicle power transfer device, including: a hole portion that houses a spool of a valve so as to be movable in an axial direction of the spool, and that has a first port opening in an inner peripheral surface of the hole portion; a first communication oil passage that extends from the first port toward an outer side in a radial direction of the spool; and a first oil passage that has an opening portion that communicates with the first communication oil passage, in which: the first oil passage is an oil passage that is formed by joining two body portions that have respective grooves to each other such that the grooves are aligned with each other on a stacked surface on which the body portions are stacked on each other, and that communicates with the first communication oil passage; and an oil passage width of the first oil passage is gradually increased from the opening portion toward the stacked surface in a sectional surface that is orthogonal to a center axis of the first oil passage at the opening portion.

### [Effects of the Invention]

In this hydraulic control device for a vehicle power transfer device, the oil passage width of the first oil passage is gradually increased from the opening portion toward the stacked surface in a sectional surface that is orthogonal to the center axis of the first oil passage at the opening portion. That is, a partition wall between the first oil passages is not a flat surface that extends along the first communication oil passage. Therefore, when a hydraulic pressure acts on the partition wall between the first oil passages, a load component toward the adjacent oil passage is dispersed to be reduced compared to a case where oil passages in a rectangular cross-sectional shape are adjacent to each other. Consequently, a force that acts to push the partition wall toward the outer side of the first oil passage is reduced, and thus the rigidity of the partition wall between the oil passages against a hydraulic pressure can be improved even if the valve body is made of a synthetic resin.

### BRIEF DESCRIPTION OF THE DRAWINGS

[FIG. 1] FIG. 1 is a schematic diagram illustrating a vehicle on which a hydraulic control device for a vehicle power transfer device according to a first embodiment is mounted.
[FIG. 2] FIG. 2 is a perspective view illustrating the hydraulic control device according to the first embodiment.
[FIG. 3] FIG. 3 is an exploded perspective view illustrating the hydraulic control device according to the first embodiment.
[FIG. 4] FIG. 4 is a plan view illustrating a seventh surface of a sixth block of a valve body of the hydraulic control device according to the first embodiment.
[FIG. 5] FIG. 5 is a sectional view of the hydraulic control device according to the first embodiment.
[FIG. 6A] FIG. 6A is a sectional view illustrating an area around third oil passages of the hydraulic control device according to the first embodiment.
[FIG. 6B] FIG. 6B illustrates the cross-sectional shape of a modified example of the third oil passage of the hydraulic control device according to the first embodiment.
[FIG. 6C] FIG. 6C illustrates the cross-sectional shape of another modified example of the third oil passage of the hydraulic control device according to the first embodiment.
[FIG. 6D] FIG. 6D illustrates the cross-sectional shape of still another modified example of the third oil passage of the hydraulic control device according to the first embodiment.
[FIG. 7] FIG. 7 is a schematic diagram illustrating a vehicle on which a hydraulic control device for a vehicle power transfer device according to a second embodiment is mounted.
[FIG. 8] FIG. 8 is a perspective view illustrating the hydraulic control device according to the second embodiment.
[FIG. 9] FIG. 9 is a bottom view illustrating the hydraulic control device according to the second embodiment.
[FIG. 10] FIG. 10 is a sectional view illustrating a state in which the hydraulic control device is cut along the IV-IV line of FIG. 9.
[FIG. 11A] FIG. 11A is a plan view of a modified example of a sleeve according to the second embodiment.
[FIG. 11B] FIG. 11B is a side view of the modified example of the sleeve according to the second embodiment.
[FIG. 11C] FIG. 11C is a cross-sectional view illustrating a state in which the sleeve is cut along the V-V line of FIG. 11A.

### MODES FOR CARRYING OUT THE INVENTION

### <First Embodiment>

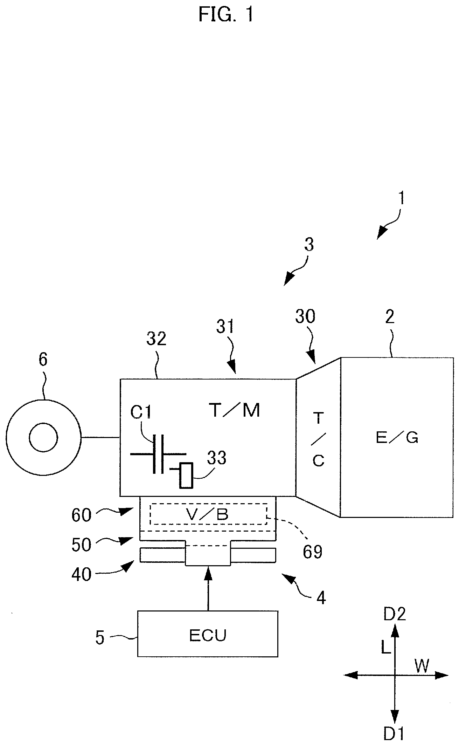

A hydraulic control device for a vehicle power transfer device according to an embodiment will be described below with reference to FIGS. 1 to 6D. First, a schematic configuration of a vehicle 1 on which an automatic transmission 3 is mounted as an example of the vehicle power transfer device will be described with reference to FIG. 1. As illustrated in FIG. 1, the vehicle 1 according to the present embodiment includes an internal combustion engine 2, the automatic transmission 3, a hydraulic control device 4 and an ECU (control device) 5 that control the automatic transmission 3, and a wheel 6, for example. The internal combustion engine 2 is an internal combustion engine such as a gasoline engine or a diesel engine, for example, and is coupled to the automatic transmission 3. In the present embodiment, the automatic transmission 3 is of a so-called FR (front-engine rear-drive) type. It should be noted, however, that the automatic transmission 3 is not limited to the FR type, and may be of an FF (front-engine front-drive) type. In addition, the same hydraulic control device 4 may be used for both the automatic transmission 3 of the FR type and an automatic transmission of the FF type. While a vehicle that utilizes only an internal combustion engine as a drive source is described as an example of the vehicle to which the vehicle power transfer device is applied in relation to the present embodiment, the present invention is not limited thereto, and the vehicle power transfer device may be applied to a hybrid vehicle that utilizes an internal combustion engine and an electric motor, for example, as drive sources.

The automatic transmission 3 has a torque converter 30, a speed change mechanism 31, and a transmission case 32 that houses such components. The torque converter 30 is interposed between the internal combustion engine 2 and the speed change mechanism 31, and can transfer a drive force of the internal combustion engine 2 to the speed change mechanism 31 via a working fluid. The torque converter 30 is provided with a lock-up clutch (not illustrated), and can directly transfer the drive force of the internal combustion engine 2 to the speed change mechanism 31 through engagement of the lock-up clutch.

The speed change mechanism 31 is a multi-speed speed change mechanism that can selectively establish a plurality of shift speeds in accordance with a combination of a plurality of clutches and brakes, including a first clutch (friction engagement element) C1, engaged at the same time as each other. In addition, the speed change mechanism 31 has a hydraulic servo 33 that can engage and disengage the first clutch C1 by supplying and discharging a hydraulic pressure. It should be noted, however, that the speed change mechanism 31 is not limited to the multi-speed speed change mechanism, and may be a continuously variable speed change mechanism such as a belt-type automatic continuously variable speed change mechanism.

The hydraulic control device 4 is constituted of a valve body, for example, and can generate a line pressure, a modulator pressure, and so forth from a hydraulic pressure supplied from an oil pump (not illustrated) using a source pressure supply section 69, such as a regulator valve, to supply and discharge a hydraulic pressure for controlling the clutches and the brakes of the speed change mechanism 31 on the basis of a control signal from the ECU 5. The configuration of the hydraulic control device 4 will be discussed in detail later.

The ECU 5 includes a CPU, a ROM that stores a processing program, a RAM that temporarily stores data, input and output ports, and a communication port, for example, and outputs various types of signals, such as a control signal for the hydraulic control device 4, from the output port.

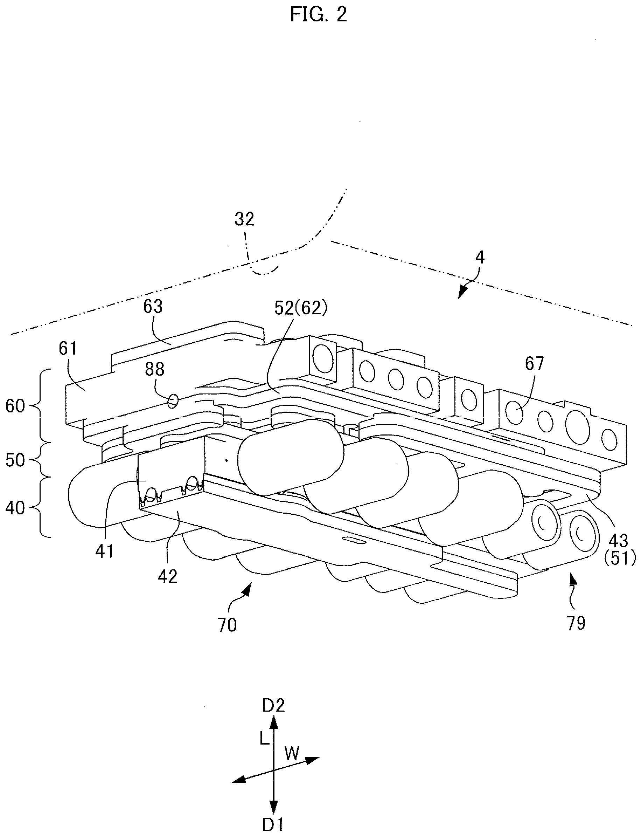

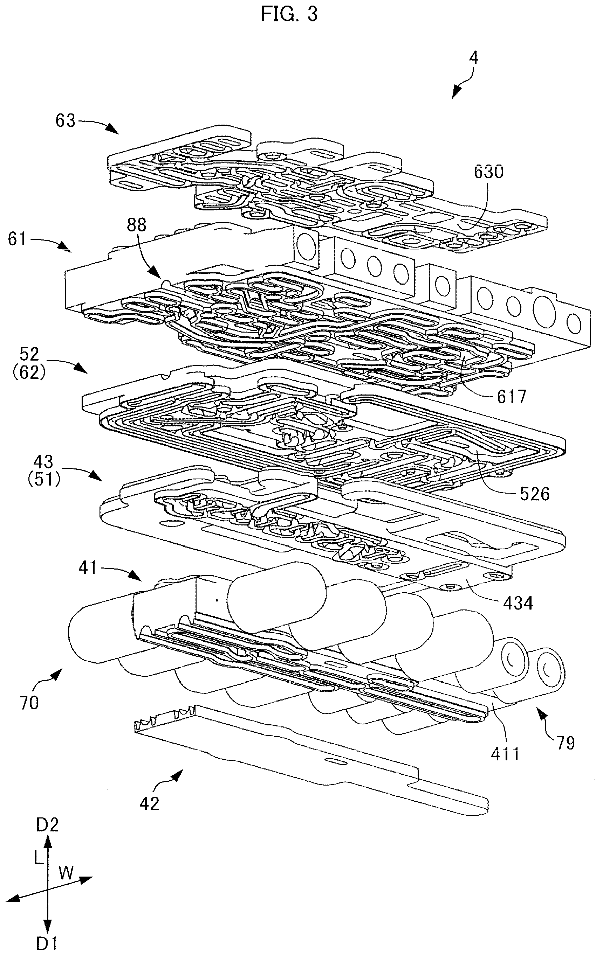

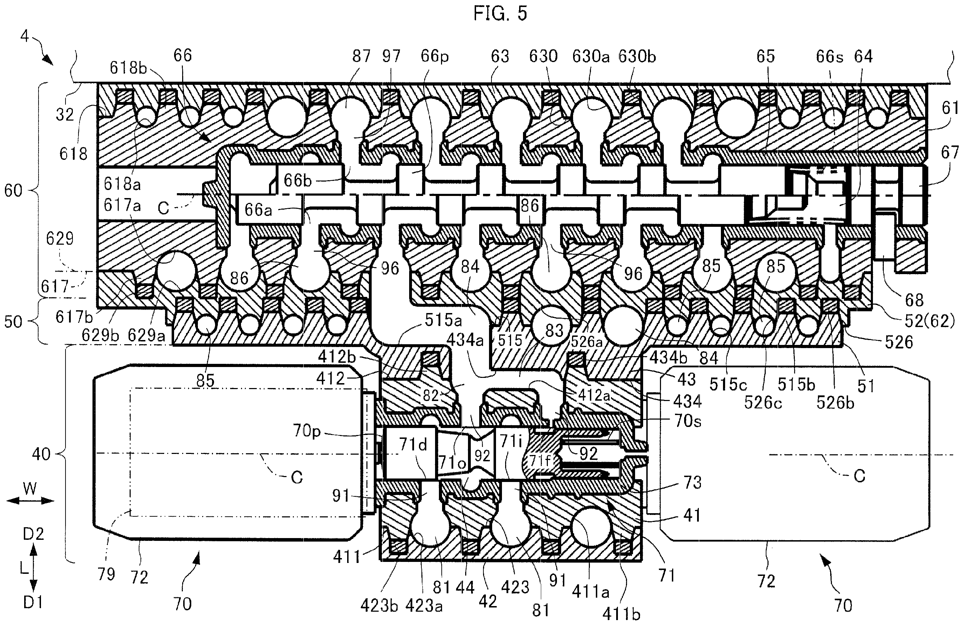

Next, the configuration of the hydraulic control device 4 discussed above will be described in detail with reference to FIGS. 2 to 6A. As illustrated in FIGS. 2 and 3, the hydraulic control device 4 is a valve body, and is formed by stacking a solenoid installation section 40 that houses a pressure regulation section 71 (see FIG. 5) for a plurality of linear solenoid valves 70, a valve installation section 60 that houses valves such as switching valves 66 (see FIG. 5), and an oil passage installation section 50 interposed between the solenoid installation section 40 and the valve installation section 60. The oil passage installation section 50 is adjacent to a third block 43 of the solenoid installation section 40. The valve installation section 60 is adjacent to the oil passage installation section 50, namely, on the opposite side of the oil passage installation section 50 from the solenoid installation section 40, and houses the switching valves 66. The oil passage installation section 50 has large diameter oil passages 84 (see FIG. 5), and allows communication between the linear solenoid valves 70 of the solenoid installation section 40 and the switching valves 66 of the valve installation section 60 through the large diameter oil passages 84.

In the present embodiment, a stacking direction L is defined as the up-down direction, and the valve installation section 60 is attached to the transmission case 32 with the solenoid installation section 40 facing downward (first direction D1) and with the valve installation section 60 facing upward (second direction D2). That is, in the stacking direction L, a direction from the oil passage installation section 50 toward the solenoid installation section 40 is defined as the first direction D1, and the opposite direction is defined as the second direction D2.

As illustrated in FIGS. 2, 3, and 5, the solenoid installation section 40 has three layers of generally plate-like blocks made of a synthetic resin, namely a first block (first layer) 41, a second block (second layer) 42, and a third block (third layer) 43, and is constituted by stacking and integrating the three layers by injection molding, for example.

The first block 41 is disposed at the center of the three layers which constitute the solenoid installation section 40, and provided with a plurality of hole portions 44 (see FIG. 5) disposed side by side in parallel with each other and directed inward alternately from one side end portion in a direction that is orthogonal to the stacking direction L and the other side end portion on the opposite side. That is, the plurality of linear solenoid valves 70 are disposed side by side in parallel with each other along a center line (center axis) C of electromagnetic portions (solenoid portions) 72. In the present embodiment, the first block 41 is formed by insert molding of sleeves 73 in a bottomed cylindrical shape and made of metal in primary injection molding by a DSI method, and the internal spaces of the sleeves 73 are used as the hole portions 44. In the present embodiment, the direction in which the hole portions 44 are formed, that is, the longitudinal direction of the center line C, is defined as a width direction W.

As illustrated in FIG. 5, each of the sleeves 73 is provided with the linear solenoid valve 70 or a solenoid valve 79 as a valve. The linear solenoid valves 70 and the solenoid valves 79 are provided with their center lines disposed in parallel with and on the same plane as each other. The linear solenoid valves 70 each have the pressure regulation section 71 which regulates a hydraulic pressure and the electromagnetic portion 72 which is driven in accordance with an electric signal to drive the pressure regulation section 71. The pressure regulation sections 71 each have a spool 70p that is housed in the sleeve 73 and that is slidable in order to regulate a hydraulic pressure, and an urging spring 70s constituted from a compression coil spring that presses the spool 70p in one direction.

Each of the sleeves 73 is provided with through holes in the shape of a long hole that extends along the circumferential direction in the peripheral side surface. A portion of each of the through holes that opens in the peripheral surface of the hole portion 44, that is, a surface of each of the through holes that opens to the hole portion 44, is defined as a port. In the present embodiment, the sleeves 73 are each provided with four ports, namely an input port (first port) 71i, an output port (second port) 71o, a feedback port (second port) 71f, and a drain port (first port) 71d. That is, the hole portion 44 houses the spool 70p of the linear solenoid valve 70 so as to be movable, and a plurality of ports open in the peripheral surface of the hole portion 44. The pressure regulation section 71 regulates a hydraulic pressure input to the input port 71i using the spool 70p, and outputs the regulated pressure from the output port 71o. The linear solenoid valves 70 are of a normally closed type that is opened when energized. The solenoid installation section 40 houses the pressure regulation sections 71, and has first oil passages 81 that communicate with the input port 71i, second oil passages 82 that communicate with the output port 71o, and feedback oil passages 83 that allow communication between the output port 71o and the feedback port 71f.

The first block 41 has: a first surface (first separation surface) 411 provided on a first direction D1 side; a plurality of first grooves 411a in a semi-circular cross-sectional shape formed in the first surface 411; projecting portions 411b formed on the first surface 411; and first communication oil passages 91 that communicate from the input port 71i and the drain port 71d toward the first surface 411 which is on the outer side. The first grooves 411a communicate with the input port 71i and the drain port 71d of the linear solenoid valve 70 through the first communication oil passages 91. The input port 71i and the drain port 71d are disposed side by side on a line along the center line C of the spool 70p. The projecting portions 411b project toward the second block 42. The first block 41 also has: a second surface (second separation surface) 412 provided on a second direction D2 side that is on the opposite side from the first surface 411; a plurality of second grooves 412a in a semi-circular cross-sectional shape formed in the second surface 412; projecting portions 412b formed on the second surface 412; and second communication oil passages 92 that communicate from the output port 71o and the feedback port 71f toward the second surface 412 which is on the outer side. The second grooves 412a communicate with the output port 71o and the feedback port 71f of the linear solenoid valve 70 through the second communication oil passages 92. The output port 71o and the feedback port 71f are disposed side by side on a line along the center line C of the spool 70p. The projecting portions 412b project toward the third block 43. The first block 41 further has the plurality of hole portions 44 which are formed along the first surface 411 and the second surface 412 between the first surface 411 and the second surface 412 so that the hole portions 44 each house the pressure regulation section 71.

The second block 42 has: a third surface (third separation surface) 423 provided so as to face the first surface 411 of the first block 41; a plurality of third grooves 423a in a semi-circular cross-sectional shape formed in the third surface 423; and recessed portions 423b formed in the third surface 423. The third grooves 423a are provided so as to face the first grooves 411a. The first oil passages 81 are formed by the first grooves 411a and the third grooves 423a with the third surface 423 stacked on and tightly contacting the first surface 411. The first oil passages 81 communicate with the input ports 71i of the plurality of linear solenoid valves 70 to allow input of a source pressure. The recessed portions 423b are dented in the same direction as the projecting direction of the projecting portions 411b of the first surface 411, and fitted with the projecting portions 411b with a clearance in the stacking direction L. The first block 41 and the second block 42 are stacked on each other with the projecting portions 411b and the recessed portions 423b fitted with each other between the adjacent oil passages 81, and integrated with each other by injection molding with gaps serving as cavities between the projecting portions 411b and the recessed portions 423b. That is, spaces between the distal end surfaces of the projecting portions 411b and the bottom surfaces of the recessed portions 423b are filled with an injection molding material as seal members, and the projecting portions 411b and the recessed portions 423b are joined to each other by injection molding.

The third block 43 is stacked on the opposite side of the first block 41 from the second block 42. The third block 43 has: a fourth surface (fourth separation surface) 434 that faces the second surface 412 of the first block 41; a plurality of fourth grooves 434a in a semi-circular cross-sectional shape formed in the fourth surface 434; and recessed portions 434b formed in the fourth surface 434. The plurality of fourth grooves 434a are provided so as to face the plurality of second grooves 412a. The second oil passages 82 are formed by the second grooves 412a and the fourth grooves 434a with the fourth surface 434 stacked on and tightly contacting the second surface 412. The recessed portions 434b are dented in the same direction as the projecting direction of the projecting portions 412b of the second surface 412, and fitted with the projecting portions 412b with a clearance in the stacking direction L. The first block 41 and the third block 43 are stacked on each other with the projecting portions 412b and the recessed portions 434b fitted with each other between the adjacent oil passages 82, and integrated with each other by injection molding with gaps between the projecting portions 412b and the recessed portions 434b serving as cavities. That is, spaces between the distal end surfaces of the projecting portions 412b and the bottom surfaces of the recessed portions 434b are filled with an injection molding material as seal members, and the projecting portions 412b and the recessed portions 434b are joined to each other by injection molding.

In this way, the solenoid installation section 40 includes the plurality of hole portions 44, the plurality of first communication oil passages 91, the plurality of first oil passages 81, the plurality of second communication oil passages 92, and the plurality of second oil passages 82. The arrangement and the cross-sectional shape of the oil passages 81 and 82 and the communication oil passages 91 and 92 will be discussed later. The second oil passages 82 which are formed by the first block 41 and the third block 43 communicate with the valve installation section 60 via the oil passage installation section 50, or allow communication between the ports of the linear solenoid valves 70 and the ports of the solenoid valves 79. The first oil passages 81 which are formed by the first block 41 and the second block 42 allow communication between the ports of the linear solenoid valves 70 and the ports of the solenoid valves 79. In the present embodiment, the input ports 71i can communicate with the source pressure supply section 69 via the first oil passages 81, and the output ports 71o can communicate with the hydraulic servo 33 (see FIG. 1) via the second oil passages 82. The hydraulic servo 33 can engage and disengage the first clutch C1, for example, by supplying and discharging a hydraulic pressure.

In the present embodiment, in the solenoid installation section 40, the first oil passages 81 are disposed side by side on the first direction D1 side along the direction of the center line C of the linear solenoid valves 70, and the second oil passages 82 are disposed on the second direction D2 side with their positions in the direction of the center line C of the linear solenoid valves 70 set between the positions of the adjacent first oil passages 81 in the direction of the center line C of the linear solenoid valves 70. That is, the first oil passages 81 and the second oil passages 82 are disposed alternately in the direction of the center line C of the linear solenoid valves 70, and disposed in a staggered manner one by one across the linear solenoid valves 70 in the stacking direction L in the solenoid installation section 40. Therefore, the oil passages 81 and 82 which communicate with the adjacent ports 71i and 71o, respectively, are not disposed adjacent to each other. Thus, it is not necessary to increase the pitch of the ports 71i and 71o, and an increase in overall length of the linear solenoid valves 70 can be suppressed. Consequently, an increase in size of the valve body can be suppressed even if the valve body is formed by stacking blocks made of a synthetic resin etc. on each other

Next, as illustrated in FIGS. 2, 3, and 5, the oil passage installation section 50 has two layers of generally plate-like blocks made of a synthetic resin, namely a fourth block 51 and a fifth block 52, and is constituted by stacking and integrating the two layers by injection molding, for example. In the present embodiment, the fourth block 51 is disposed on the second direction D2 side with respect to the third block 43, and the fourth block 51 and the third block 43 are constituted of a single member. It should be noted, however, that the fourth block 51 and the third block 43 are not limited to being a single member, and may be formed as separate members and integrated with each other by injection molding, bonding, welding, or the like.

The fourth block 51 has: a fifth surface 515 provided on the second direction D2 side; a plurality of large diameter grooves 515a and a plurality of small diameter grooves 515c in a semi-circular cross-sectional shape formed in the fifth surface 515; and projecting portions 515b formed on the fifth surface 515. The projecting portions 515b project in the second direction D2, and are disposed on the fifth surface 515 so as to surround the plurality of grooves 515a and 515c. The plurality of large diameter grooves 515a are disposed so as to overlap the pressure regulation sections 71 of the linear solenoid valves 70 as viewed in the stacking direction L. In addition, the plurality of small diameter grooves 515c are disposed so as to overlap the electromagnetic portions 72 of the linear solenoid valves 70 as viewed in the stacking direction L.

The fifth block 52 has: a sixth surface 526 provided so as to face the fifth surface 515 of the fourth block 51; a plurality of large diameter grooves 526a and a plurality of small diameter grooves 526c in a semi-circular cross-sectional shape formed in the sixth surface 526; and recessed portions 526b formed in the sixth surface 526. The plurality of large diameter grooves 526a are provided so as to face the plurality of large diameter grooves 515a. The plurality of small diameter grooves 526c are provided so as to face the plurality of small diameter grooves 515c. The plurality of large diameter oil passages 84 are formed by the plurality of large diameter grooves 526a and the plurality of large diameter grooves 515a, and a plurality of small diameter oil passages 85 are formed by the plurality of small diameter grooves 526c and the plurality of small diameter grooves 515c, by stacking the sixth surface 526 so as to face the joint surface 515 of the fourth block 51. The recessed portions 526b are dented in the same direction as the projecting direction of the projecting portions 515b of the fifth surface 515, and fitted with the projecting portions 515b with a clearance in the stacking direction L. That is, the recessed portions 526b are disposed in the sixth surface 526 so as to surround the plurality of grooves 526a and 526c. The fourth block 51 and the fifth block 52 are stacked on each other with the projecting portions 515b and the recessed portions 526b fitted with each other between the adjacent oil passages 84 and 85, and integrated with each other by injection molding with gaps between the projecting portions 515b and the recessed portions 526b serving as cavities. That is, spaces between the distal end surfaces of the projecting portions 515b and the bottom surfaces of the recessed portions 526b are filled with an injection molding material as seal members, and the projecting portions 515b and the recessed portions 526b are joined to each other by injection molding.

In the present embodiment, the electromagnetic portions 72 of the linear solenoid valves 70 are disposed so as to overlap the small diameter oil passages 85 of the oil passage installation section 50, and disposed so as not to overlap the large diameter oil passages 84, as viewed in the stacking direction L. In addition, the pressure regulation sections 71 of the linear solenoid valves 70 are disposed so as to overlap the large diameter oil passages 84 of the oil passage installation section 50 as viewed in the stacking direction L. The large diameter oil passages 84 are used to allow working oil at a high flow rate, such as a line pressure, a range pressure, and hydraulic pressures for controlling friction engagement elements, for example, to flow. The small diameter oil passages 85 are used to allow working oil at a low flow rate, such as signal pressures for the switching valves 66, for example, to flow.

Next, as illustrated in FIGS. 2 to 6A, the valve installation section 60 has three layers of generally plate-like blocks made of a synthetic resin, namely a sixth block 61, a seventh block 62, and an eighth block 63, and is constituted by stacking and integrating the three layers by injection molding, for example.

The sixth block 61 is disposed at the center of the three layers which constitute the valve installation section 60, and provided with a plurality of hole portions 64 directed inward from one side end portion in a direction that is orthogonal to the stacking direction L and the other side end portion on the opposite side. In the present embodiment, the sixth block 61 is formed by insert molding of sleeves 65 in a bottomed cylindrical shape and made of metal in primary injection molding by a DSI method, and the internal spaces of the sleeves 65 are used as the hole portions 64.

A switching valve 66 which is a valve is formed in each of the sleeves 65. Each of the sleeves 65 houses a spool 66p that is slidable, an urging spring 66s constituted from a compression coil spring that presses the spool 66p in one direction, and a stopper 67 that keeps a state in which the urging spring 66s presses the spool 66p, and such components form the switching valve 66. The stopper 67 is fixed in the vicinity of an opening portion of the sleeve 65 by a retainer 68.

Each of the sleeves 65 is provided with through holes in the shape of a long hole that extends along the circumferential direction in the peripheral side surface. A portion of each of the through holes that opens in the peripheral surface of the hole portion 64, that is, a surface of each of the through holes that opens to the hole portion 64, is defined as a port. In the present embodiment, the sleeves 65 are each provided with a plurality of first ports 66a and a plurality of second ports 66b. That is, the hole portion 64 houses the spool 66p of the switching valve 66 so as to be movable, and the plurality of ports 66a and 66b open in the peripheral surface of the hole portion 64. In the present embodiment, the switching valve 66 can switch between oil passages or regulate a hydraulic pressure, for example. The switching valve 66 is a valve in which different hydraulic pressures can act on two adjacent first ports 66a, and that can output a hydraulic pressure supplied to the first port 66a switchably from a plurality of other different ports 66a and 66b, for example. A lock-up relay valve that engages and disengages a lock-up clutch by supplying and discharging a lock-up pressure can be applied as the switching valve 66.

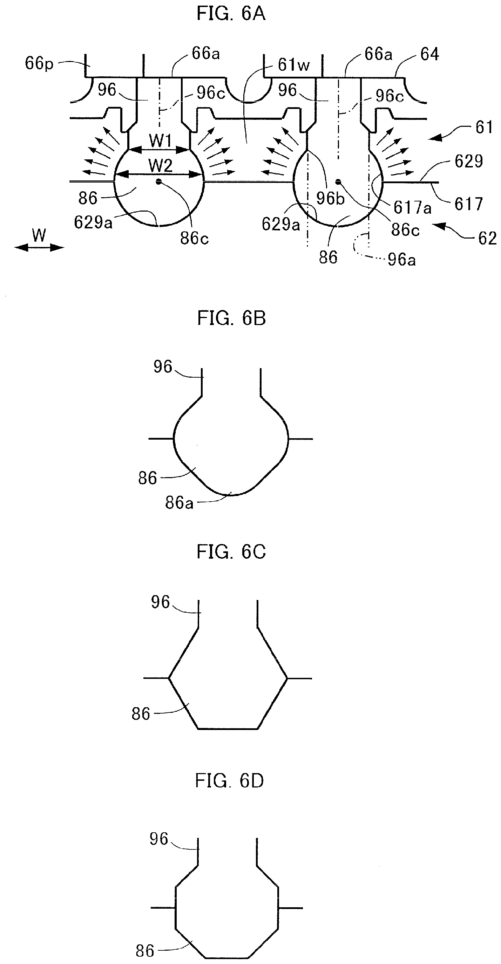

The sixth block (first layer, first body portion) 61 has: a seventh surface (first facing surface) 617; a plurality of grooves 617a in a semi-circular cross-sectional shape formed in the seventh surface 617; projecting portions 617b formed on the seventh surface 617; and third communication oil passages (first communication oil passages) 96 that communicate from the first ports 66a toward the seventh surface 617 which is on the outer side (see FIG. 5). In the present embodiment, a center line (center axis) 96c of the third communication oil passage 96 corresponds to the stacking direction L, and a direction that is orthogonal to the center line 96c corresponds to the width direction W (see FIG. 6A). The plurality of grooves 617a communicate with the first ports 66a of the switching valve 66 through the third communication oil passages 96. The first ports 66a are disposed side by side on a line along the center line (center axis) C of the spool 66p. The projecting portions 617b are formed on the seventh surface 617 between the adjacent grooves 617a, and project toward the seventh block 62. The sixth block 61 also has: an eighth surface (second facing surface) 618 provided on the opposite side from the seventh surface 617; a plurality of grooves 618a in a semi-circular cross-sectional shape formed in the eighth surface 618; projecting portions 618b formed on the eighth surface 618; and fourth communication oil passages (second communication oil passages) 97 that communicate from the second ports 66b toward the eighth surface 618 which is on the outer side. The plurality of grooves 618a communicate with the second ports 66b of the switching valve 66 through the fourth communication oil passages 97. The second ports 66b are disposed side by side on a line along the center line C of the spool 66p. The projecting portions 618b are formed on the eighth surface 618 between the adjacent grooves 618a, and project toward the eighth block 63. The sixth block 61 further has the plurality of hole portions 64 which are formed along the seventh surface 617 and the eighth surface 618 between the seventh surface 617 and the eighth surface 618 so that the hole portions 64 each house the switching valve 66.

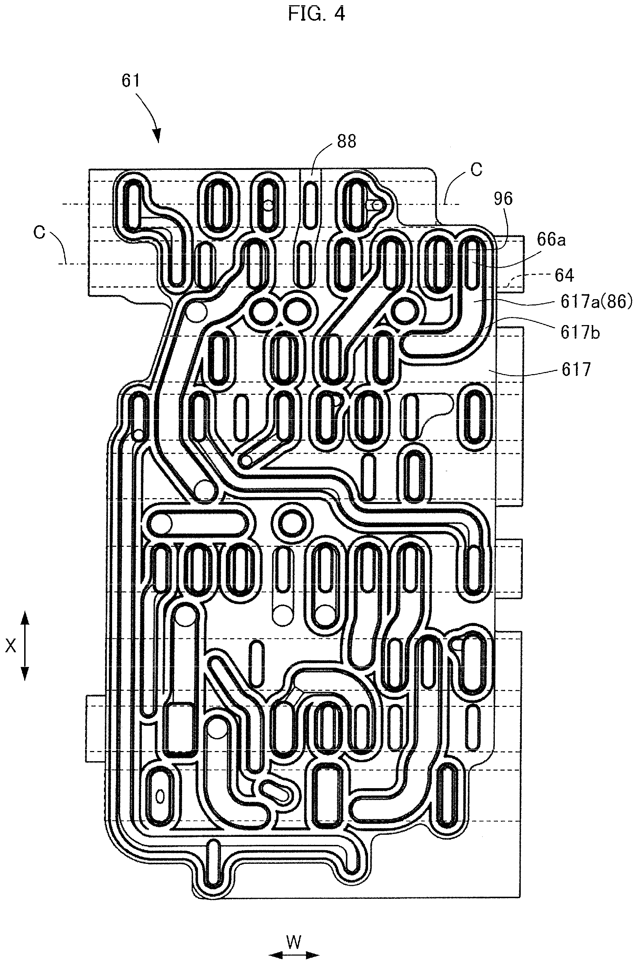

On the seventh surface 617 of the sixth block 61, as illustrated in FIG. 4, the first ports 66a are disposed side by side on a line along the center line C of the spool 66p. That is, the first ports 66a are disposed side by side along an arrangement direction X in which a plurality of switching valves 66 are disposed side by side. Here, the arrangement direction X is a direction that is orthogonal to the width direction W, the first direction D1, and the second direction D2.

As illustrated in FIGS. 2 to 6A, the seventh block (second layer, second body portion) 62 is stacked on the opposite side of the sixth block 61 from the transmission case 32. The seventh block 62 has: a ninth surface (third facing surface) 629; a plurality of grooves 629a in a semi-circular cross-sectional shape formed in the ninth surface 629; and recessed portions 629b formed in the ninth surface 629. The plurality of grooves 629a are provided so as to face the plurality of grooves 617a. A plurality of third oil passages (first oil passages) 86 are formed by the plurality of grooves 617a and the plurality of grooves 629a with the ninth surface 629 stacked in the stacking direction L so as to face the seventh surface 617 of the sixth block 61. The recessed portions 629b are dented in the same direction as the projecting direction of the projecting portions 617b of the seventh surface 617, and fitted with the projecting portions 617b with a clearance in the stacking direction L. In the present embodiment, the sixth block 61 and the seventh block 62 are stacked on each other with the projecting portions 617b and the recessed portions 629b fitted with each other between the adjacent oil passages 86, and integrated with each other by injection molding with an injection molding material injected into gaps serving as cavities between the projecting portions 617b and the recessed portions 629b. That is, spaces between the distal end surfaces of the projecting portions 617b and the bottom surfaces of the recessed portions 629b are filled with an injection molding material as seal members, and the projecting portions 617b and the recessed portions 629b are joined to each other by injection molding.

The eighth block (third layer) 63 is stacked on the opposite side of the sixth block 61 from the seventh block 62, and attached to the transmission case 32. The eighth block 63 has: a tenth surface (fourth facing surface) 630; a plurality of grooves 630a in a semi-circular cross-sectional shape formed in the tenth surface 630; and recessed portions 630b formed in the tenth surface 630. The plurality of grooves 630a are provided so as to face the plurality of grooves 618a. A plurality of fourth oil passages (second oil passages) 87 are formed by the plurality of grooves 630a and the plurality of grooves 618a with the tenth surface 630 stacked so as to face the eighth surface 618 of the sixth block 61. The recessed portions 630b are dented in the same direction as the projecting direction of the projecting portions 618b of the eighth surface 618, and fitted with the projecting portions 618b with a clearance in the stacking direction L. The sixth block 61 and the eighth block 63 are stacked on each other with the projecting portions 618b and the recessed portions 630b fitted with each other between the adjacent oil passages 80, and integrated with each other by injection molding with gaps serving as cavities between the projecting portions 618b and the recessed portions 630b. That is, spaces between the distal end surfaces of the projecting portions 618b and the bottom surfaces of the recessed portions 630b are filled with an injection molding material as seal members, and the projecting portions 618b and the recessed portions 630b are joined to each other by injection molding.

In the present embodiment, in addition, a drain oil passage 88 is provided between the sixth block 61 and the seventh block 62, for example. The drain oil passage 88 is formed in both the seventh surface 617 and the ninth surface 629 by the groove 617a which is formed in the seventh surface 617 and the groove 629a which is formed in the ninth surface 629, and communicates with the outside of the sixth block 61 and the seventh block 62 to drain working oil.

In the present embodiment, in the valve installation section 60, the third oil passages 86 are disposed side by side on the first direction D1 side along the direction of the center line C of the switching valves 66, and the fourth oil passages 87 are disposed on the second direction D2 side with their positions in the direction of the center line C of the switching valves 66 set between the positions of the adjacent third oil passages 86 in the direction of the center line C of the switching valves 66. That is, the third oil passages 86 and the fourth oil passages 87 are disposed in a staggered manner one by one across the switching valves 66 in the stacking direction L in the valve installation section 60. Therefore, the oil passages 86 and 87 which communicate with the adjacent ports 66a and 66b, respectively, are not disposed adjacent to each other. Thus, it is not necessary to increase the pitch of the ports 66a and 66b, and an increase in overall length of the switching valves 66 can be suppressed. Consequently, an increase in size of the valve body can be suppressed even if the valve body is formed by stacking blocks made of a synthetic resin etc. on each other

Here, the arrangement and the cross-sectional shape of the oil passages 81, 82, 86, and 87 and the communication oil passages 91, 92, 96, and 97 will be described in detail. While the third oil passages 86 and the third communication oil passages 96 are described as typical examples here, the same also applies to the other oil passages 82, 86, and 87 and communication oil passages 92, 96, and 97.

As illustrated in FIG. 6A, the third oil passages 86 are each an oil passage in a circular cross-sectional shape formed by stacking and joining the two blocks 61 and 62, which have the grooves 617a and 629a in a semi-circular cross-sectional shape, with the grooves 617a and 629a aligned with each other. The oil passage width of the third oil passage 86 in the width direction W which is orthogonal to the center line 96c of the third communication oil passage 96 is increased from an opening portion 96b of the third communication oil passage 96 in the third oil passage 86 toward a center (center axis) 86c of the third oil passage 86. That is, in a sectional surface that is orthogonal to the center 86c of the first oil passage 86 at the opening portion 96b, the oil passage width W1, W2 of the first oil passage 86 is gradually increased from the opening portion 96b toward the stacked surface 617, 629, and the oil passage width W2 of the third oil passage 86 near the center 86c of the third oil passage 86 is larger than the oil passage width W1 of the third oil passage 86 at the opening portion 96b of the third communication oil passage 96 in the third oil passage 86. Consequently, a wall surface of a partition wall 61w between the adjacent third oil passages 86 is not a flat surface that extends along the third communication oil passages 96. Therefore, when a hydraulic pressure acts on the partition wall 61w between the third oil passages 86, a load component toward the adjacent oil passage 86 is dispersed to be reduced compared to a case where oil passages in a rectangular cross-sectional shape are adjacent to each other. Hence, a force that acts to push the partition wall 61w toward the outer side of the third oil passage 86 is reduced, and thus the rigidity of the partition wall between the oil passages 81, 82, 86, and 87 against a hydraulic pressure can be improved even if the hydraulic control device 4 is made of a synthetic resin. In the present embodiment, in particular, the third oil passages 86 have a circular cross-sectional shape. Therefore, concentration of a load from a hydraulic pressure on the peripheral surface of the oil passage can be avoided as much as possible, enhancing rigidity.

In addition, the third communication oil passages 96 and the third oil passages 86 are disposed such that an extended surface 96a of the outer peripheral surface of the third communication oil passage 96 that is extended toward the oil passage 86 side is positioned on the inner side of the third oil passage 86. That is, as viewed from the side of the center line C of the switching valve 66, the peripheral surface of the third communication oil passage 96 is narrower than the peripheral surface of the third oil passage 86 and positioned on the inner side without overlapping the peripheral surface of the third oil passage 86 in the width direction W. Consequently, the third oil passage 86 projects in the width direction W away from the third communication oil passage 96, and thus the partition wall 61w can be prevented from being a flat surface that extends along the third communication oil passage 96.

In the present embodiment, as illustrated in FIGS. 6A and 4, for example, the center line of the third communication oil passage 96 is disposed so as to intersect the center line (center axis) of the third oil passage 86. Thus, the third oil passage 86 projects toward both sides in the width direction W by the same amount with respect to the third communication oil passage 96, and thus the balance of the partition wall 61w can be maintained easily when the partition wall 61w is pressed in the width direction W.

In the present embodiment, the valve body of the hydraulic control device 4 for the automatic transmission 3 discussed above is manufactured by the DSI method. Therefore, to manufacture the valve body of the hydraulic control device 4, the first block 41 to the eighth block 63 are each formed by injection molding, and the dies which face each other are moved relative to each other without taking out the blocks from the molds. Some layers are stacked on each other by die sliding with the projecting portions and the recessed portions fitted with each other, and injection molding is performed by injecting a synthetic resin into the cavities to integrate the stacked layers with each other. Such die sliding and stacking is performed for all the joint surfaces of the first block 41 to the eighth block 63 to form the valve body. In the present embodiment, an injection molding material is used as a seal member that integrates the stacked blocks with each other. However, the present invention is not limited thereto, and an adhesive may also be used, for example. That is, the projecting portions and the recessed portions of the layers may be integrated with each other by adhesion. In this case, the valve body can be assembled inexpensively.

Next, operation of the hydraulic control device 4 for the automatic transmission 3 discussed above will be described with reference to FIGS. 1 to 5.

When the oil pump is driven and a hydraulic pressure is supplied after the internal combustion engine 2 is started, a line pressure, a modulator pressure, and a range pressure are generated by the source pressure supply section 69 such as a regulator valve and a modulator valve. The line pressure, the modulator pressure, and the range pressure which have been generated are supplied to the input ports 71i of the linear solenoid valves 70 via the first oil passages 81 of the solenoid installation section 40. In the linear solenoid valves 70, the electromagnetic portions 72 are actuated on the basis of an electric signal from the ECU 5, the spools 70p of the pressure regulation sections 71 are moved, and a regulated hydraulic pressure is output from the output ports 71o. A part of the working oil which is output from the output ports 71o is supplied to the feedback ports 71f via the feedback oil passages 83, so that a hydraulic pressure to be output is regulated.

The other part of the working oil which is output from the output ports 71o flows from the second oil passages 82 via the large diameter oil passages 84, to be supplied to the automatic transmission 3 by way of the valve installation section 60 or to be supplied to the switching valves 66. Consequently, a hydraulic pressure is supplied to the automatic transmission 3 with the positions of the spools 66p of the switching valves 66 changed or with communication between the ports allowed or blocked. When a hydraulic pressure is supplied to the automatic transmission 3, the clutches, the brakes, etc. of the automatic transmission 3 are engaged and disengaged to establish a desired shift speed, or various portions of the automatic transmission 3 are lubricated.

In the hydraulic control device 4 for the automatic transmission 3 according to the present embodiment, as has been described above, the oil passage width W1, W2 of the first oil passage 86 is gradually increased from the opening portion 96b toward the stacked surface 617, 629 in a sectional surface that is orthogonal to the center 86c of the first oil passage 86 in the opening portion 96b, for example. That is, the partition wall 61w between the third oil passages 86 is not a flat surface that extends along the third communication oil passages 96. Therefore, when a hydraulic pressure acts on the partition wall 61w between the third oil passages 86, a load component toward the adjacent oil passage 86 is dispersed to be reduced compared to a case where oil passages in a rectangular cross-sectional shape are adjacent to each other. Consequently, a force that acts to push the partition wall 61w toward the outer side of the third oil passage 86 is reduced, and thus the rigidity of the partition wall 61w between the oil passages 86 against a hydraulic pressure can be improved even if the valve body is made of a synthetic resin. The same also applies to the first oil passage 81 and the first communication oil passage 91, the second oil passage 82 and the second communication oil passage 92, and the fourth oil passage 87 and the fourth communication oil passage 97.

In the hydraulic control device 4 for the automatic transmission 3 according to the present embodiment, in addition, the oil passages 81, 82, 86, and 87 each have a circular cross-sectional shape. Therefore, concentration of a load from a hydraulic pressure on the peripheral surface of each oil passage can be avoided as much as possible, so that rigidity is enhanced.

In addition, in the hydraulic control device 4 for the automatic transmission 3 according to the present embodiment, as illustrated in FIGS. 6A and 4, for example, the center line of the third communication oil passage 96 is disposed so as to intersect the center line of the third oil passage 86. Thus, the third oil passage 86 projects toward both sides in the width direction W by the same amount with respect to the third communication oil passage 96, and thus the balance of the partition wall 61w can be maintained easily when the partition wall 61w is pressed in the width direction W.

In the automatic transmission 3 according to the present embodiment discussed above, as illustrated in FIG. 6A, the third oil passage 86 has a circular cross-sectional shape. However, the present invention is not limited thereto. Examples of the cross-sectional shape of the third oil passage 86 may include a polygonal shape in which the cross-sectional shape of the third oil passage 86 has a rounded angled portion 86a as illustrated in FIG. 6B, a regular hexagonal shape as illustrated in FIG. 6C, and a regular octagonal shape as illustrated in FIG. 6D. In any case, the cross-sectional shape does not include an angled portion of a right angle or less, and thus a load component directed toward the adjacent oil passage 86 can be distributed to be reduced compared to a case where oil passages in a rectangular cross-sectional shape are adjacent to each other. In addition, concentration of a load from a hydraulic pressure on the peripheral surface of each oil passage can be avoided as much as possible, so that rigidity is enhanced. The same also applies to the cross-sectional shapes of the other oil passages 81, 82, and 87.

In the automatic transmission 3 according to the present embodiment, in addition, the oil passage installation section 50 is provided between the solenoid installation section 40 and the valve installation section 60. However, the present invention is not limited thereto. For example, the solenoid installation section 40 and the valve installation section 60 may be directly stacked on each other with no oil passage installation section 50 provided (see a second embodiment).

In the automatic transmission 3 according to the present embodiment, in addition, all the layers of the first block 41 to the eighth block 63 are made of a synthetic resin. However, the present invention is not limited thereto, and at least some of the layers may be made of metal such as die-cast aluminum, for example.

In the automatic transmission 3 according to the present embodiment, in addition, the valve installation section 60 is attached to the transmission case 32. However, the present invention is not limited thereto. For example, the solenoid installation section 40 may be attached to the transmission case 32.

### <Second Embodiment>

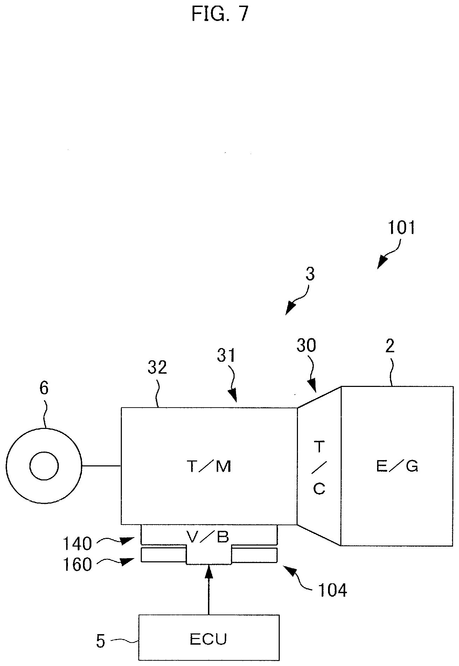

Next, a second embodiment will be described in detail with reference to FIGS. 7 to 11C. The present embodiment is different in configuration from the first embodiment in that no oil passage installation section is provided between a solenoid installation section 160 and a valve installation section 140. However, the other components are the same as those according to the first embodiment, and thus the same reference numerals are given to omit detailed description.

Hydraulic control devices for an automatic transmission that include a valve body that has a plurality of various valves such as linear solenoid valves and switching valves and oil passages that allow communication between such valves have conventionally been widespread. Many valve bodies are made of metal such as die-cast aluminum. In recent years, however, there have been developed valve bodies in which several blocks, which are made of a synthetic resin and in which half oil passages are formed by injection molding, are stacked on each other and integrated with each other by welding etc. to form a single valve body (see JP 2012-82917 A). In such a valve body which is formed by stacking the blocks which are made of a synthetic resin, the valves are often provided with their longitudinal directions aligned with a direction (planar direction) that is orthogonal to the stacking direction, for example.

Here, a synthetic resin is inferior in the pressure resistance to metal, and therefore the cross-sectional shape of oil passages is preferably circular. When the oil passages have a circular cross-sectional shape for this reason, the width of the oil passages is larger than that of oil passages with a rectangular cross-sectional shape. In addition, in order to maintain the seal performance between adjacent oil passages, the width of welded portions between the blocks is secured to obtain the pressure resistance at the welded portions, and thus the pitch of the oil passages is larger than that of the valve body which is made of die-cast aluminum according to the related art.

In the valve body discussed above, however, the oil passages which communicate with the ports of the valves are disposed continuously on one side of the valves in the stacking direction. Thus, the pitch of the ports must be larger than that of the valve body according to the related art, since the pitch of the oil passages is larger, in the case where the valves have a large number of ports. An increase in the pitch of the ports of the valves increases the overall length of the valves, which may increase the size of the valve body. Thus, it has been desired to suppress an increase in size of the valve body.

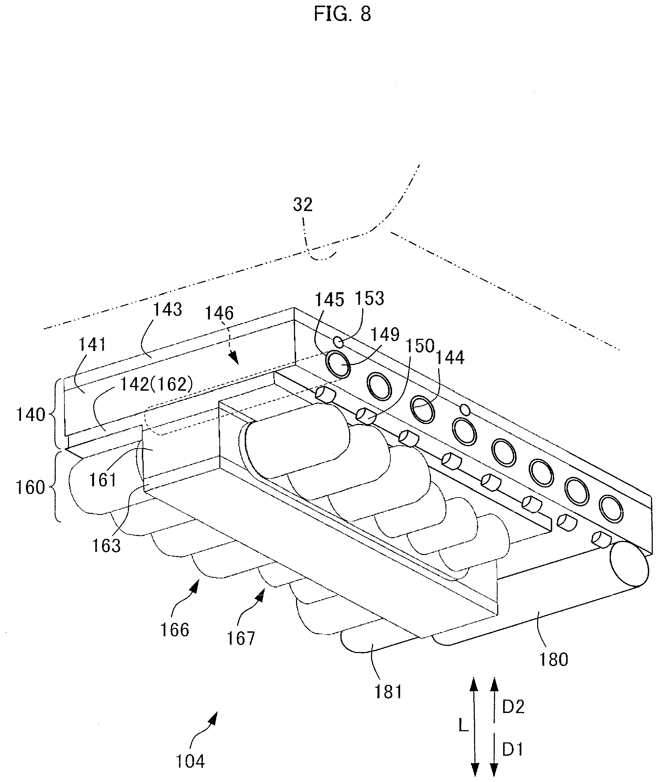

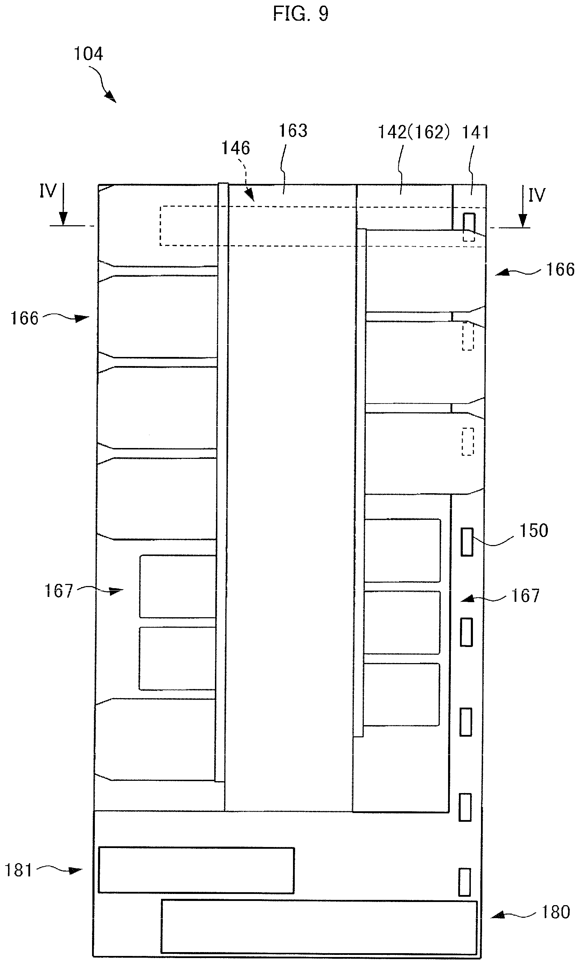

As illustrated in FIG. 7, a vehicle 101 according to the present embodiment includes the internal combustion engine 2, the automatic transmission 3, a hydraulic control device 104 and the ECU (control device) 5 that control the automatic transmission 3, and the wheel 6, for example. As illustrated in FIGS. 8 and 9, the hydraulic control device 104 includes: a switching valve installation section (valve installation section) 140 attached to the transmission case 32 and provided with switching valves (valves) 146; and a solenoid installation section (valve installation section) 160 stacked on the opposite side of the switching valve installation section 140 from the automatic transmission 3 and provided with linear solenoid valves 166, solenoid valves 167, and so forth.

The switching valve installation section 140 includes three layers of generally plate-like blocks made of a synthetic resin, namely a first layer 141, a second layer 142, and a third layer 143, and is constituted by stacking and integrating such layers by bonding, welding, etc., for example. The switching valve installation section 140 is mounted to the automatic transmission 3, and can supply a hydraulic pressure to the automatic transmission 3. The first layer 141, the second layer 142, and the third layer 143 are each provided with grooves in a semi-circular cross-sectional shape recessed from their separation surfaces (facing surfaces). The grooves in the stacked layers are joined to each other to form oil passages.

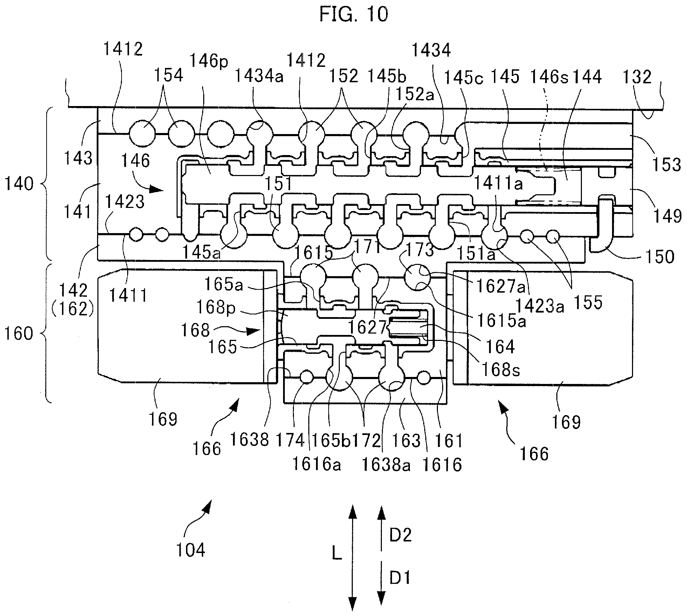

As illustrated in FIG. 10, the first layer 141 is disposed at the center of the three layers which constitute the switching valve installation section 140, and has a first separation surface (first facing surface) 1411 and a second separation surface (second facing surface) 1412 provided on the opposite sides from each other, a plurality of first hole portions (hole portions) 144, a plurality of first grooves 1411a, and a plurality of second grooves 1412a. The plurality of first hole portions 144 are formed along the first separation surface 1411 and the second separation surface 1412 between the first separation surface 1411 and the second separation surface 1412. In the present embodiment, the first layer 141 is formed by insert molding of sleeves 145 in a bottomed cylindrical shape and made of metal, and the internal spaces of the sleeves 145 are used as the first hole portions 144. A switching valve 146 which is a spool valve is formed in each of the sleeves 145. That is, each of the sleeves 145 houses a spool 146p that is slidable, an urging spring 146s constituted from a compression coil spring that presses the spool 146p in one direction, and a stopper 149 that keeps a state in which the urging spring 146s presses the spool 146p, and such components form the switching valve 146. The stopper 149 is fixed in the vicinity of an opening portion of the sleeve 145 by a retainer 150.

Each of the sleeves 145 is provided with first ports 145a, second ports 145b, and a third port 145c, which are a large number of through holes, in the outer peripheral wall portion. The ports 145a, 145b, and 145c are formed generally over the entire periphery, and portions of such ports other than opening portions are closed by the synthetic resin which constitutes the first layer 141. That is, the plurality of ports 145a, 145b, and 145c of the plurality of switching valves 146, which each have the spool 146p housed in the first hole portion 144, are disposed in the first layer 141, and the state of communication in the sleeve 145 is varied in accordance with the position of the spool 146p. The first grooves 1411a are formed in a semi-circular cross-sectional shape in the first separation surface 1411, and communicate with the first ports 145a. The first grooves 1411a form first oil passages 151 together with third grooves 1423a formed in a third separation surface (third facing surface) 1423 of the second layer 142 to be discussed later. The second grooves 1412a are formed in a semi-circular cross-sectional shape in the second separation surface 1412, and communicate with the second ports 145b. The second grooves 1412a form second oil passages 152 together with fourth grooves 1434a formed in a fourth separation surface 1434 of the third layer 143 to be discussed later.

The second layer 142 is stacked on the opposite side of the first layer 141 from the transmission case 32. The second layer 142 has the third separation surface 1423 which faces the first separation surface 1411 of the first layer 141, and the plurality of third grooves 1423a which are formed in a semi-circular cross-sectional shape in the third separation surface 1423. The third grooves 1423a face the first grooves 1411a. The plurality of first oil passages 151 are formed by the plurality of first grooves 1411a and the plurality of third grooves 1423a with the third separation surface 1423 stacked so as to face the first separation surface 1411 of the first layer 141. Therefore, the first oil passages 151 communicate with the first ports 145a of the switching valves 146.

That is, the first oil passages 151 communicate with the plurality of first ports 145a which are formed on the first direction D1 side, which is one side in a direction that is orthogonal to the center line (center axis) of the switching valves 146, and are disposed on the first direction D1 side with respect to the switching valves 146. In addition, the plurality of first oil passages 151 are disposed side by side on the first direction D1 side along the center line direction of the switching valves 146. In addition, the first oil passages 151 have a circular cross-sectional shape, are disposed on the first direction D1 side with respect to the first ports 145a to which the first oil passages 151 are coupled, and disposed in communication with the first ports 145a via first coupling oil passages 151a. The diameter of the first oil passages 151 is set to be larger than the width of the first coupling oil passages 151a as viewed in the radial direction of the switching valves 146.

The third layer 143 is stacked on the opposite side of the first layer 141 from the second layer 142, and attached to the transmission case 32. The third layer 143 has the fourth separation surface (fourth facing surface) 1434 which faces the second separation surface 1412 of the first layer 141, and the plurality of fourth grooves 1434a which are formed in a semi-circular cross-sectional shape in the fourth separation surface 1434. The fourth grooves 1434a face the second grooves 1412a. The plurality of second oil passages 152 are formed by the plurality of second grooves 1412a and the plurality of fourth grooves 1434a with the fourth separation surface 1434 stacked so as to face the second separation surface 1412 of the first layer 141. Therefore, the second oil passages 152 communicate with the second ports 145b of the switching valves 146.

That is, the second oil passages 152 communicate with the plurality of second ports 145b which are formed on the second direction D2 side, which is on the opposite side of the switching valves 146 from the first direction D1 side, and are disposed on the second direction D2 side with respect to the switching valves 146. In addition, the second oil passages 152 are disposed on the second direction D2 side with their positions in the center line direction of the switching valves 146 set between the positions of the adjacent first oil passages 151 in the center line direction of the switching valves 146. In addition, the second oil passages 152 have a circular cross-sectional shape, are disposed on the second direction D2 side with respect to the second ports 145b to which the second oil passages 152 are coupled, and disposed in communication with the second ports 145b via second coupling oil passages 152a. The diameter of the second oil passages 152 is set to be larger than the width of the second coupling oil passages 152a as viewed in the radial direction of the switching valves 146.

In the present embodiment, the first oil passages 151 and the second oil passages 152 which communicate with the ports 145a and 145b formed in the sleeve 145 are disposed alternately along the sleeve 145. That is, the first oil passages 151 and the second oil passages 152 are disposed with their longitudinal directions orthogonal to the center line direction of the switching valves 146.

The first oil passages 151 which are formed by the first layer 141 and the second layer 142 communicate with the solenoid installation section 160, or allow communication between the first ports 145a in each of the switching valves 146. The first oil passages 151 which allow communication between the first ports 145a in each of the switching valves 146 are formed by only the first layer 141 and the second layer 142, and are not disposed between the adjacent switching valves 146 and 146.

The second oil passages 152 which are formed by the first layer 141 and the third layer 143 communicate with the automatic transmission 3, or allow communication between the second ports 145b in each of the switching valves 146. The second oil passages 152 which allow communication between the second ports 145b in each of the switching valves 146 are formed by only the first layer 141 and the third layer 143, and are not disposed between the adjacent switching valves 146 and 146. That is, the oil passages 151 which allow communication between the ports 145a and the oil passages 152 which allow communication between the ports 145b in each of the switching valves 146 and 146 are formed either between the second layer 142 and the first layer 141 or between the first layer 141 and the third layer 143. Consequently, an increase in the interval between the adjacent switching valves 146 and 146 is suppressed, and an increase in size of the hydraulic control device 104 can be prevented.

In the present embodiment, in addition, an oil passage 153 that communicates with the third port 145c and that extends along the longitudinal direction of the first hole portion 144 is formed by the first layer 141 and the third layer 143, for example. The oil passage 153 is exposed to a lateral end surface of the switching valve installation section 140, and piping (not illustrated) can be attached to the oil passage 153. Further, oil passages 154 that do not communicate with a port are formed by the first layer 141 and the third layer 143, and signal oil passages 155 etc. that do not communicate with a port and that are thinner than the oil passages 154 are formed by the first layer 141 and the second layer 142, for example. The signal oil passages 155 are utilized to supply a hydraulic pressure to be detected to a hydraulic pressure sensor etc., for example. Further, the switching valve installation section 140 is also provided with an oil passage (not illustrated) that penetrates the switching valve installation section 140 in the stacking direction L and that can supply a hydraulic pressure supplied from the solenoid installation section 160, as it is, to the automatic transmission 3.

Next, the solenoid installation section 160 includes three layers of generally plate-like blocks made of a synthetic resin, namely a fourth layer (first layer) 161, a fifth layer (third layer) 162, and a sixth layer (second layer) 163, and is constituted by stacking and integrating such layers by bonding, welding, etc., for example. The solenoid installation section 160 is stacked on the switching valve installation section 140, and can supply a hydraulic pressure to the switching valve installation section 140. The fourth layer 161, the fifth layer 162, and the sixth layer 163 are each provided with grooves in a semi-circular cross-sectional shape recessed from their separation surfaces. The grooves in the stacked layers are joined to each other to form oil passages. In the present embodiment, the second layer 142 and the fifth layer 162 are an identical member, and have been integrated with each other. It should be noted, however, that the second layer 142 and the fifth layer 162 are not limited to being an identical member, and may be formed as separate members and integrated with each other by bonding, welding, or the like.

The fourth layer 161 is disposed at the center of the three layers which constitute the solenoid installation section 160, and has a fifth separation surface (second facing surface) 1615 and a sixth separation surface (first facing surface) 1616 provided on the opposite sides from each other, a plurality of second hole portions (hole portions) 164, a plurality of ports 165a and 165b, a plurality of fifth grooves 1615a, and a plurality of sixth grooves 1616a. The plurality of second hole portions 164 are formed along the fifth separation surface 1615 and the sixth separation surface 1616 between the fifth separation surface 1615 and the sixth separation surface 1616. In the present embodiment, the fourth layer 161 is formed by insert molding of sleeves 165 in a bottomed cylindrical shape and made of metal, and the internal spaces of the sleeves 165 are used as the second hole portions 164. The linear solenoid valve 166 or the solenoid valve 167 (see FIGS. 8 and 9) is formed in each of the sleeves 165. The linear solenoid valves 166 has a pressure regulation section 168 housed in the sleeve 165 and a solenoid portion 169 that drives the pressure regulation section 168 in accordance with an electric signal. The pressure regulation section 168 has a spool 168p that is slidable in order to regulate a hydraulic pressure, and an urging spring 168s constituted from a compression coil spring that presses the spool 168p in one direction.

Each of the sleeves 165 is provided with the ports 165a and 165b, which are a large number of through holes, in the peripheral side surface. The ports 165a and 165b are formed generally over the entire periphery, and portions of such ports other than opening portions are closed by the synthetic resin which constitutes the fourth layer 161. That is, the plurality of ports 165a and 165b of the plurality of linear solenoid valves 166, each of which has the spool 168p which is housed in the second hole portion 164, or solenoid valves 167 are disposed in the fourth layer 161. The fifth grooves 1615a are formed in a semi-circular cross-sectional shape in the fifth separation surface 1615, and communicate with some ports (second ports) 165a of the plurality of ports 165a and 165b. The fifth grooves 1615a form third oil passages (second oil passages) 171 together with seventh grooves 1627a formed in a seventh separation surface (fourth separation surface) 1627 of the fifth layer 162 to be discussed later. The sixth grooves 1616a are formed in a semi-circular cross-sectional shape in the sixth separation surface 1616, and communicate with the other ports (first ports) 165b of the plurality of ports 165a and 165b. The sixth grooves 1616a form fourth oil passages (first oil passages) 172 together with eighth grooves 1638a formed in an eighth separation surface (third separation surface) 1638 of the sixth layer 163 to be discussed later.

The fifth layer 162 is stacked on the fourth layer 161 on the side of the transmission case 32. The fifth layer 162 has the seventh separation surface 1627 which faces the fifth separation surface 1615 of the fourth layer 161, and the plurality of seventh grooves 1627a which are formed in a semi-circular cross-sectional shape in the seventh separation surface 1627. The seventh grooves 1627a face the fifth grooves 1615a. The plurality of third oil passages 171 are formed by the plurality of fifth grooves 1615a and the plurality of seventh grooves 1627a with the seventh separation surface 1627 stacked so as to face the fifth separation surface 1615 of the fourth layer 161. Therefore, the third oil passages 171 communicate with some ports 165a of the plurality of ports 165a and 165b of the linear solenoid valves 166 or the solenoid valves 167.

The sixth layer 163 is stacked on the opposite side of the fourth layer 161 from the fifth layer 162. The sixth layer 163 has the eighth separation surface 1638 which faces the sixth separation surface 1616 of the fourth layer 161, and the plurality of eighth grooves 1638a which are formed in a semi-circular cross-sectional shape in the eighth separation surface 1638. The eighth grooves 1638a face the sixth grooves 1616a. The plurality of fourth oil passages 172 are formed by the plurality of sixth grooves 1616a and the plurality of eighth grooves 1638a with the eighth separation surface 1638 stacked so as to face the sixth separation surface 1616 of the fourth layer 161. Therefore, the fourth oil passages 172 communicate with the other ports 165b of the plurality of ports 165a and 165b of the linear solenoid valves 166 or the solenoid valves 167.

In the present embodiment, the third oil passages 171 and the fourth oil passages 172 which communicate with the ports 165a and 165b which are formed in the sleeve 165 are disposed alternately along the sleeve 165. That is, at least some of the third oil passages 171 and the fourth oil passages 172 are disposed in a staggered manner one by one across the linear solenoid valves 166 or the solenoid valves 167 in the stacking direction L.

The third oil passages 171 which are formed by the fourth layer 161 and the fifth layer 162 communicate with the switching valve installation section 140, or allow communication between the ports 165a of each of the linear solenoid valves 166 and communication between the ports of each of the solenoid valves 167. The third oil passages 171 which allow communication between the ports 165a of each of the linear solenoid valves 166 and communication between the ports of each of the solenoid valves 167 are formed by only the fourth layer 161 and the fifth layer 162, and are not disposed between the adjacent linear solenoid valves 166 and between adjacent solenoid valves 167.

The fourth oil passages 172 which are formed by the fourth layer 161 and the sixth layer 163 allow communication between the ports 165b of each of the linear solenoid valves 166 and communication between the ports of each of the solenoid valves 167. The fourth oil passages 172 which allow communication between the ports 165b of each of the linear solenoid valves 166 and communication between the ports of each of the solenoid valves 167 are formed by only the fourth layer 161 and the sixth layer 163, and are not disposed between the adjacent linear solenoid valves 166 and between the adjacent solenoid valves 167. That is, the oil passages 171 which allow communication between the ports 165a and the oil passages 172 which allow communication between the ports 165b in each of the linear solenoid valves 166 and in each of the solenoid valves 167 are formed either between the fifth layer 162 and the fourth layer 161 or between the fourth layer 161 and the sixth layer 163. Consequently, an increase in the interval between the adjacent linear solenoid valves 166 and between the adjacent solenoid valves 167 is suppressed, and an increase in size of the hydraulic control device 4 can be prevented.

In the present embodiment, in addition, oil passages 173 that do not communicate with a port are formed by the fourth layer 161 and the fifth layer 162, and signal oil passages 174 etc. that do not communicate with a port and that are thinner than the oil passages 173 are formed by the fourth layer 161 and the sixth layer 163, for example.

In addition, in the present embodiment, as illustrated in FIGS. 8 and 9, the solenoid installation section 160 is provided with a regulator valve 180 and a modulator valve 181 (source pressure valves) that regulate a source pressure to be supplied to the linear solenoid valves 166 and the solenoid valves 167. The regulator valve 180 and the modulator valve 181 are each a spool valve that includes a spool and an urging spring (not illustrated), and communicate with the linear solenoid valves 166 and the solenoid valves 167 through the oil passages 171 and 172. The regulator valve 180 and the modulator valve 181 generate a line pressure and a modulator pressure by regulating a hydraulic pressure supplied from an oil pump (not illustrated), and supplies the line pressure and the modulator pressure to the linear solenoid valves 166 and the solenoid valves 167 as source pressures.

Next, operation of the hydraulic control device 104 for the automatic transmission 3 discussed above will be described with reference to FIGS. 7 to 10.

When the oil pump is driven and a hydraulic pressure is supplied after the internal combustion engine 2 is started, a line pressure and a modulator pressure are generated by the regulator valve 180 and the modulator valve 181. The line pressure and the modulator pressure which have been generated flow through the oil passages 171 and 172 of the solenoid installation section 160 to be supplied to the linear solenoid valves 166 and the solenoid valves 167. The linear solenoid valves 166 operate in accordance with an electric signal from the ECU 5, and generate and output a desired hydraulic pressure on the basis of the line pressure and the modulator pressure. The solenoid valves 167 operate in accordance with an electric signal from the ECU 5, and turn on and off supply of a hydraulic pressure on the basis of the line pressure and the modulator pressure.

A part of the hydraulic pressure which is supplied from the linear solenoid valves 166 and the solenoid valves 167 is supplied from the third oil passages 171 to the automatic transmission 3 through the switching valve installation section 140. In addition, another part of the hydraulic pressure which is supplied from the linear solenoid valves 166 and the solenoid valves 167 is supplied from the third oil passages 171 to the switching valves 146 by way of the first oil passages 151 and through the fifth layer 162 (second layer 142). Consequently, a hydraulic pressure is supplied to the automatic transmission 3 with the positions of the spools 146p of the switching valves 146 changed or with communication between the ports 145a, 145b, and 145c allowed or blocked. When a hydraulic pressure is supplied to the automatic transmission 3, the clutches, the brakes, etc. of the automatic transmission 3 are engaged and disengaged to establish a desired shift speed, or various portions of the automatic transmission 3 are lubricated.

In the hydraulic control device 104 for the automatic transmission 3 according to the present embodiment, as has been described above, in the switching valve installation section 140, the first oil passages 151 are disposed side by side on the first direction D1 side along the center line direction of the switching valves 146, and the second oil passages 152 are disposed on the second direction D2 side with their positions in the center line direction of the switching valves 146 set between the positions of the adjacent first oil passages 151 in the center line direction of the switching valves 146. That is, the first oil passages 151 and the second oil passages 152 are disposed in a staggered manner one by one across the switching valves 146 in the stacking direction L in the switching valve installation section 140. Therefore, the oil passages 151 and 152 which communicate with the adjacent ports 145a and 145b, respectively, are not disposed adjacent to each other. Thus, it is not necessary to increase the pitch of the ports 145a and 145b, and an increase in overall length of the switching valves 146 can be suppressed. Consequently, an increase in size of the valve body can be suppressed even if the valve body is formed by stacking blocks made of a synthetic resin etc. on each other

In addition, in the hydraulic control device 104 for the automatic transmission 3 according to the present embodiment, also in the solenoid installation section 160, as in the switching valve installation section 140, the fourth oil passages 172 are disposed side by side on the first direction D1 side along the center line direction of the linear solenoid valves 166 and the solenoid valves 167, and the third oil passages 171 are disposed on the second direction D2 side with their positions in the center line direction of the linear solenoid valves 166 and the solenoid valves 167 set between the positions of the adjacent fourth oil passages 172 in the center line direction of the linear solenoid valves 166 and the solenoid valves 167. That is, the third oil passages 171 and the fourth oil passages 172 are disposed in a staggered manner one by one across the linear solenoid valves 166 or the solenoid valves 167 in the stacking direction L. Therefore, the oil passages 171 and 172 which communicate with the adjacent ports 165a and 165b, respectively, are not disposed adjacent to each other. Thus, it is not necessary to increase the pitch of the ports 165a and 165b, and an increase in overall length of the linear solenoid valves 166 and the solenoid valves 167 can be suppressed. Consequently, an increase in size of the valve body can be suppressed even if the valve body is formed by stacking blocks made of a synthetic resin etc. on each other

In the hydraulic control device 104 for the automatic transmission 3 according to the present embodiment, in addition, the oil passages which allow communication between the ports 145a and communication between the ports 145b in each of the switching valves 146 are formed either between the second layer 142 and the first layer 141 or between the first layer 141 and the third layer 143. In addition, the oil passages 171 which allow communication between the ports 165a and the oil passages and 172 which allow communication between the ports 165b in each of the linear solenoid valves 166 and in each of the solenoid valves 167 are formed either between the fifth layer 162 and the fourth layer 161 or between the fourth layer 161 and the sixth layer 163. Consequently, an increase in the interval between the adjacent various valves 146, 166, and 167 is suppressed, and an increase in size of the hydraulic control device 4 can be prevented.

In the hydraulic control device 104 for the automatic transmission 3 according to the present embodiment discussed above, the switching valve installation section 140 is attached to the transmission case 32, and the solenoid installation section 160 is stacked on the opposite side of the switching valve installation section 140 from the automatic transmission 3. However, the present invention is not limited thereto. For example, the solenoid installation section 160 may be mounted to the transmission case 32 of the automatic transmission 3 to be able to supply a hydraulic pressure to the automatic transmission 3, and the switching valve installation section 140 may be mounted on the opposite side of the solenoid installation section 160 from the automatic transmission 3.

In the hydraulic control device 104 for the automatic transmission 3 according to the present embodiment, in addition, all the first layer 141 to the sixth layer 163 are made of a synthetic resin. However, the present invention is not limited thereto, and at least some of the layers may be made of metal such as die-cast aluminum, for example.

In the hydraulic control device 104 for the automatic transmission 3 according to the present embodiment, in addition, the oil passages 151, 152, 171, and 172 each have a circular cross-sectional shape. However, the present invention is not limited thereto, and the oil passages 151, 152, 171, and 172 may each have a rectangular cross-sectional shape.

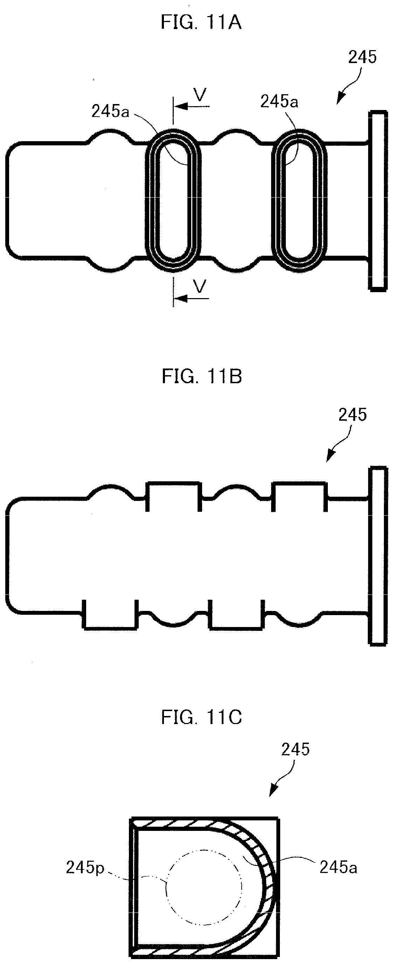

In the hydraulic control device 4 for the automatic transmission 3 according to the present embodiment, in addition, the first ports 145a and the second ports 145b each have the shape of a tube that allows communication between the inside and the outside of the sleeve 145. However, the present invention is not limited thereto. For example, as illustrated in FIGS. 11A, 11B, and 11C, a sleeve 245 may have ports 245a provided in an annular shape so as to surround a spool 245p in the circumferential direction about the center line (center axis) of the spool 245p.

The first and second embodiments include at least the following configuration. The present embodiments provide a hydraulic control device (4, 104) for a vehicle power transfer device (3), including: a hole portion (44, 64) that houses a spool (70p, 66p, 146p, 168p) of a valve (66, 70, 146, 166) so as to be movable in an axial direction (width direction W) of the spool (70p, 66p, 146p, 168p), and that has a first port (71i, 71d, 66a, 145a, 165b) opening in an inner peripheral surface of the hole portion (44, 64); a first communication oil passage (91, 96) that extends from the first port (71i, 71d, 66a, 145a, 165b) toward an outer side in a radial direction of the spool (70p, 66p, 146p, 168p); and a first oil passage (81, 86, 151, 172) that has an opening portion (96b) that communicates with the first communication oil passage (91, 96). In the hydraulic control device (4, 104), the first oil passage (81, 86, 151, 172) is an oil passage that is formed by joining two body portions (61, 62) that have respective grooves (617a, 629a) to each other such that the grooves (617a, 629a) are aligned with each other on a stacked surface (617, 629) on which the body portions (61, 62) are stacked on each other, and that communicates with the first communication oil passage (91, 96); and an oil passage width (W1, W2) of the first oil passage (81, 86, 151, 172) is gradually increased from the opening portion (96b) toward the stacked surface (617, 629) in a sectional surface that is orthogonal to a center axis of the first oil passage (81, 86, 151, 172) at the opening portion (96b). According to this configuration, a partition wall (61w) between the first oil passages (81, 86, 151, 172) is not a flat surface that extends along the first communication oil passages (91, 96). Therefore, when a hydraulic pressure acts on the partition wall (61w) between the first oil passages (81, 86, 151, 172), a load component toward the adjacent oil passage is dispersed to be reduced compared to a case where oil passages in a rectangular cross-sectional shape are adjacent to each other. Consequently, a force that acts to push the partition wall (61w) toward the outer side of the first oil passage (81, 86, 151, 172) is reduced, and thus the rigidity of the partition wall (61w) between the oil passages against a hydraulic pressure can be improved even if the valve body is made of a synthetic resin.

In the hydraulic control device (4, 104) for the vehicle power transfer device (3) according to each of the embodiments, in addition, the hole portion (44, 64) is provided with a plurality of the first ports (71i, 71d, 66a, 145a, 165b); and the plurality of the first ports (71i, 71d, 66a, 145a, 165b) are disposed side by side on a line along a center axis of the spool (70p, 66p, 146p, 168p). According to this configuration, communication between the plurality of the first ports (71i, 71d, 66a, 145a, 165b) is allowed by common use of the first oil passage (81, 86, 151, 172) which is linear. Therefore, complication of the arrangement of the first oil passage (81, 86, 151, 172) can be suppressed to reduce the size of the valve body.

In the hydraulic control device (4, 104) for the vehicle power transfer device (3) according to each of the embodiments, in addition, the first communication oil passage (91, 96) is disposed such that a center axis of the first communication oil passage (91, 96) is orthogonal to the center axis of the first oil passage (81, 86, 151, 172). According to this configuration, the first oil passage (81, 86, 151, 172) projects toward both sides in the width direction by the same amount with respect to the first communication oil passage (91, 96), and thus the balance of the partition wall (61w) between the first oil passages (81, 86, 151, 172) can be maintained easily when the partition wall (61w) is pressed in the width direction (W).

In the hydraulic control device (4, 104) for the vehicle power transfer device (3) according to each of the embodiments, in addition, the two body portions include a first body portion (61) and a second body portion (62), both of which are made of a synthetic resin; the first body portion (61) has a first surface (617) and a first groove (617a) formed in the first surface (617); the second body portion (62) has a second surface (629) and a second groove (629a) formed in the second surface (629) to face the first groove (617a), and is stacked on the first body portion (61) with the second surface (629) joined to the first surface (617); and the first oil passage (86) is formed by the first groove (617a) in the first surface (617) and the second groove (629a) in the second surface (629). According to this configuration, an increase in size of the valve body can be suppressed even if the valve body is formed by stacking blocks made of a synthetic resin etc. on each other

In the hydraulic control device (4, 104) for the vehicle power transfer device (3) according to each of the embodiments, in addition, a plurality of the first ports (71i, 71d, 66a, 145a, 165b) are formed on a first direction (D1) side, which is one side in a direction that is orthogonal to a center axis of the valve (66, 70, 146, 166), and a plurality of the first oil passages (81, 86, 151, 172) are disposed on the first direction (D1) side with respect to the valve (66, 70, 146, 166); the hydraulic control device (4, 104) further includes a plurality of second oil passages (82, 87, 152, 171) that communicate with a plurality of second ports (71o, 71f, 66b, 145b, 165a) formed on a second direction (D2) side, which is opposite to the first direction (D1) side with respect to the valve (66, 70, 146, 166), and that are disposed on the second direction (D2) side with respect to the valve (66, 70, 146, 166); the plurality of the first oil passages (81, 86, 151, 172) are disposed side by side on the first direction (D1) side with respect to the valve (66, 70, 146, 166) along a center axis direction of the valve (66, 70, 146, 166) with portions of the first oil passages (81, 86, 151, 172) that communicate with the first ports intersecting the center axis of the valve (66, 70, 146, 166); the plurality of second oil passages (82, 87, 152, 171) are disposed side by side on the second direction (D2) side with respect to the valve (66, 70, 146, 166) along the center axis direction of the valve (66, 70, 146, 166) with portions of the second oil passages (82, 87, 152, 171) that communicate with the second ports intersecting the center axis of the valve (66, 70, 146, 166); and the first oil passages (81, 86, 151, 172) and the second oil passages (82, 87, 152, 171) are disposed alternately in the center axis direction of the valve (66, 70, 146, 166). According to this configuration, the oil passages (151, 152, 171, 172) which communicate with the respectively adjacent ports (145a, 145b, 165a, 165b) are not disposed adjacent to each other. Thus, it is not necessary to increase the pitch of the ports (145a, 145b, 165a, 165b), and an increase in overall length of the valves (146, 166) can be suppressed. Consequently, an increase in size of the valve body can be suppressed.

In the hydraulic control device (4, 104) for the vehicle power transfer device (3) according to each of the embodiments, in addition, the first oil passages (81, 86, 151, 172) are disposed such that the portions of the first oil passages (81, 86, 151, 172) that communicate with the first ports are orthogonal to the center axis of the valve (66, 70, 146, 166); and the second oil passages (82, 87, 152, 171) are disposed such that the portions of the second oil passages (82, 87, 152, 171) that communicate with the second ports are orthogonal to the center axis of the valve (66, 70, 146, 166). According to this configuration, the oil passages which communicate with the adjacent ports (145a, 145b, 165a, 165b) can be disposed significantly away from each other. It is not necessary to increase the pitch of the oil passages, and an increase in overall length of the valves (66, 70, 146, 166) can be suppressed.

In addition, the hydraulic control device (4, 104) for the vehicle power transfer device (3) according to each of the embodiments further includes a second communication oil passage (92, 97) that extends from the plurality of second ports (71o, 71f, 66b, 145b, 165a) toward the outer side in the radial direction of the spool (70p, 66p, 146p, 168p), and that communicates with the plurality of second oil passages (82, 87, 152, 171). In the hydraulic control device (4, 104), the second oil passages (82, 87, 152, 171) are each an oil passage that has an opening portion communicating with the second communication oil passage (92, 97), that is formed by joining two body portions that have respective grooves to each other such that the grooves are aligned with each other on a stacked surface on which the body portions are stacked on each other, and that communicates with the second communication oil passage (92, 97); and an oil passage width of the second oil passages (82, 87, 152, 171) is gradually increased from the opening portion toward the stacked surface in a sectional surface that is orthogonal to a center axis of the second oil passages (82, 87, 152, 171) at the opening portion. According to this configuration, a partition wall between the second oil passages (82, 87, 152, 171) is not a flat surface that extends along the second communication oil passages (92, 97). Therefore, when a hydraulic pressure acts on the partition wall between the second oil passages (82, 87, 152, 171), a load component toward the adjacent oil passage is dispersed to be reduced compared to a case where oil passages in a rectangular cross-sectional shape are adjacent to each other. Consequently, a force that acts to push the partition wall toward the outer side of the second oil passage (82, 87, 152, 171) is reduced, and thus the rigidity of the partition wall between the oil passages against a hydraulic pressure can be improved even if the valve body is made of a synthetic resin.

In addition, the hydraulic control device (4, 104) for the vehicle power transfer device (3) according to each of the embodiments further includes a tubular sleeve (145) provided with the hole portion (44, 64) which houses the spool (70p, 66p, 146p, 168p) so as to be slidable. In the hydraulic control device (4, 104), the plurality of the first ports (71i, 71d, 66a, 145a, 165b) and the plurality of second ports (71o, 71f, 66b, 145b, 165a) are formed in an inner peripheral surface of the sleeve (145), and a state of communication in the sleeve (145) is varied in accordance with a position of the spool (70p, 66p, 146p, 168p). According to this configuration, the valve (66, 70, 146, 166) can be provided easily by insert molding of the sleeve (145).

In addition, the hydraulic control device (4, 104) for the vehicle power transfer device (3) according to each of the embodiments further includes a tubular sleeve (245) provided with the hole portion which houses the spool (245p) so as to be slidable, in which at least one port (245a) of the plurality of the first ports and the plurality of second ports is provided in an annular shape so as to surround the spool (245p) in a circumferential direction about a center axis of the spool (245p). According to this configuration, it is not necessary to increase the pitch of the oil passages even if the sleeve (245) has the tubular port (245a), and an increase in overall length of the valve can be suppressed.

In addition, the hydraulic control device (4, 104) for the vehicle power transfer device (3) according to each of the embodiments further includes a first layer (41, 61, 141, 161) that has a first separation surface (411, 1616) provided on the first direction (D1) side, a second separation surface (412, 1615) provided on the second direction (D2) side, a plurality of first hole portions (44, 64, 144, 146) formed along the first separation surface (411, 1616) and the second separation surface (412, 1615) between the first separation surface (411, 1616) and the second separation surface (412, 1615) to house the valve (66, 70, 146, 166), the first communication oil passage (91, 96), a plurality of first grooves (411a, 1616a) formed in the first separation surface (411, 1616) to communicate with the first ports (71i, 71d, 66a, 145a, 165b) through the first communication oil passage (91, 96), the second communication oil passage (92, 97), and a plurality of second grooves (412a, 1615a) formed in the second separation surface (412, 1615) to communicate with the second ports (71o, 71f, 66b, 145b, 165a) through the second communication oil passage (92, 97); a second layer (42, 163) that has a third separation surface (423, 1638) that faces the first separation surface (411, 1616) of the first layer (41, 61, 141, 161) and a plurality of third grooves (423a, 1638a) formed in the third separation surface (423, 1638) to face the first grooves (411a, 1616a), the plurality of the first oil passages (81, 86, 151, 172) being formed by the first grooves (411a, 1616a) and the third grooves (423a, 1638a) with the third separation surface (423, 1638) stacked so as to face the first separation surface (411, 1616) of the first layer (41, 61, 141, 161); and a third layer (43, 62) that has a fourth separation surface (434, 1627) that is stacked on an opposite side of the first layer (41, 61, 141, 161) from the second layer (42, 163) and that faces the second separation surface (412, 1615) of the first layer (41, 61, 141, 161) and a plurality of fourth grooves (434a, 1627a) formed in the fourth separation surface (434, 1627) to face the second grooves (412a, 1615a), the plurality of second oil passages (82, 87, 152, 171) being formed by the second grooves (412a, 1615a) and the fourth grooves (434a, 1627a) with the fourth separation surface (434, 1627) stacked so as to face the second separation surface (412, 1615) of the first layer (41, 61, 141, 161). According to this configuration, an increase in size of the valve body can be suppressed even if the valve body is formed by stacking blocks made of a synthetic resin etc. on each other

In the hydraulic control device (104) for the vehicle power transfer device (3) according to each of the embodiments, in addition, the first hole portions (44) of the first layer (141) open on one side in a direction along the center axis of the valve (146). According to this configuration, work can be performed from only one direction when the valve (146) is assembled to the first layer (141). Thus, the work can be simplified compared to a case where the work needs to be performed from a plurality of directions.

In the hydraulic control device (4, 104) for the vehicle power transfer device (3) according to each of the embodiments, in addition, the valve (70, 166) is a linear solenoid valve (70, 166) that has a pressure regulation section (71, 168) that regulates a hydraulic pressure using the spool (70p, 168p) and a solenoid portion (72, 169) that drives the pressure regulation section (71, 168) in accordance with an electric signal; and the first hole portions (44, 164) of the first layer (41, 61, 141, 161) which are disposed adjacent to each other open in a staggered manner on one side and the other side in a direction along the center axis of the valve (70, 166). According to this configuration, the pitch of the linear solenoid valves (70, 166) can be shortened by disposing the solenoid portions (72, 169) alternately at one side end portion and the other side end portion even in the case where it is difficult to shorten the pitch of the linear solenoid valves (70, 166) which are disposed adjacent to each other since the solenoid portions (72, 169) are large in size. Consequently, an increase in size of the valve body can be suppressed.

In addition, the hydraulic control device (4, 104) for the vehicle power transfer device (3) according to each of the embodiments further includes a source pressure valve (180, 181) that regulates a source pressure to be supplied to the linear solenoid valve (166). According to this configuration, the source pressure valve (180, 181) and the linear solenoid valve (166) can be disposed in the same layer, and thus the oil passage from the source pressure valve (180, 181) to the linear solenoid valve (166) can be simplified, so that the size of the valve body is reduced.

In the hydraulic control device (4, 104) for the vehicle power transfer device (3) according to each of the embodiments, in addition, the valve is a valve in which different hydraulic pressures can act on two adjacent first ports (71i, 71d, 66a, 145a, 165b). According to this configuration, there is a possibility that a load that acts to push the partition wall between the adjacent first ports (71i, 71d, 66a, 145a, 165b) is generated by a hydraulic pressure. Even in such a case, a force that acts to push the partition wall toward the outer side of the first oil passage (81, 86, 151, 172) is reduced, and thus the rigidity of the partition wall between the oil passages against a hydraulic pressure can be improved.

In the hydraulic control device (4, 104) for the vehicle power transfer device (3) according to each of the embodiments, in addition, the valve is a switching valve that can output a hydraulic pressure supplied to the first port (71i, 71d, 66a, 145a, 165b) switchably from a plurality of other different ports. According to this configuration, in the valve body which uses such a switching valve, a force that acts to push the partition wall toward the outer side of the first oil passage (81, 86, 151, 172) is reduced, and thus the rigidity of the partition wall between the oil passages against a hydraulic pressure can be improved.

### INDUSTRIAL APPLICABILITY

The hydraulic control device for a vehicle power transfer device according to the present disclosure can be mounted on a vehicle etc., for example, and is particularly suitable for use for an automatic transmission that switches engagement elements etc. in accordance with supply and discharge of a hydraulic pressure.

### Description of the Reference Numerals

3 AUTOMATIC TRANSMISSION (VEHICLE POWER TRANSFER DEVICE)
4 HYDRAULIC CONTROL DEVICE
41 FIRST BLOCK (FIRST LAYER)
42 SECOND BLOCK (SECOND LAYER)
43 THIRD BLOCK (THIRD LAYER)
44 HOLE PORTION
61 SIXTH BLOCK (FIRST LAYER)
62 SEVENTH BLOCK (SECOND LAYER)
63 EIGHTH BLOCK (THIRD LAYER)
64 HOLE PORTION
66a FIRST PORT
71d DRAIN PORT (FIRST PORT)
71i INPUT PORT (FIRST PORT)
71o OUTPUT PORT (SECOND PORT)
71f FEEDBACK PORT (SECOND PORT)
72 ELECTROMAGNETIC PORTION (SOLENOID PORTION)
81 FIRST OIL PASSAGE
82 SECOND OIL PASSAGE
86 THIRD OIL PASSAGE (FIRST OIL PASSAGE)
86c CENTER (CENTER AXIS)
87 FOURTH OIL PASSAGE (SECOND OIL PASSAGE)
91 FIRST COMMUNICATION OIL PASSAGE
96 THIRD COMMUNICATION OIL PASSAGE (FIRST COMMUNICATION OIL PASSAGE)
96b OPENING PORTION
97 FOURTH COMMUNICATION OIL PASSAGE (SECOND COMMUNICATION OIL PASSAGE)
141 FIRST LAYER
142 SECOND LAYER
143 THIRD LAYER
144 FIRST HOLE PORTION (HOLE PORTION)
145 SLEEVE
145a FIRST PORT
145b SECOND PORT
146 SWITCHING VALVE (VALVE)
146p SPOOL
151 FIRST OIL PASSAGE
151a FIRST COUPLING OIL PASSAGE
152 SECOND OIL PASSAGE
152a SECOND COUPLING OIL PASSAGE
160 SOLENOID INSTALLATION SECTION (VALVE INSTALLATION SECTION)
161 FOURTH LAYER (FIRST LAYER)
162 FIFTH LAYER (THIRD LAYER)
163 SIXTH LAYER (SECOND LAYER)
164 SECOND HOLE PORTION (HOLE PORTION)
165a SECOND PORT
165b FIRST PORT
166 LINEAR SOLENOID VALVE (VALVE)
168 PRESSURE REGULATION SECTION
168p SPOOL
169 SOLENOID PORTION
171 THIRD OIL PASSAGE (SECOND OIL PASSAGE)
172 FOURTH OIL PASSAGE (FIRST OIL PASSAGE)
180 REGULATOR VALVE (SOURCE PRESSURE VALVE)
181 MODULATOR VALVE (SOURCE PRESSURE VALVE)
245 SLEEVE
245aPORT
245p SPOOL
D1 FIRST DIRECTION
D2 SECOND DIRECTION

## Claims

1. A hydraulic control device for a vehicle power transfer device, comprising:
a hole portion that houses a spool of a valve so as to be movable in an axial direction of the spool, and that has a first port opening in an inner peripheral surface of the hole portion;
a first communication oil passage that extends from the first port toward an outer side in a radial direction of the spool; and
a first oil passage that has an opening portion that communicates with the first communication oil passage, wherein:
the first oil passage is an oil passage that is formed by joining two body portions that have respective grooves to each other such that the grooves are aligned with each other on a stacked surface on which the body portions are stacked on each other, and that communicates with the first communication oil passage; and
an oil passage width of the first oil passage is gradually increased from the opening portion toward the stacked surface in a sectional surface that is orthogonal to a center axis of the first oil passage at the opening portion.

2. The hydraulic control device for a vehicle power transfer device according to claim 1, wherein
the hole portion is provided with a plurality of the first ports; and the plurality of the first ports are disposed side by side on a line along a center axis of the spool.

3. The hydraulic control device for a vehicle power transfer device according to claim 1 or 2, wherein
the first communication oil passage is disposed such that a center axis of the first communication oil passage is orthogonal to the center axis of the first oil passage.

4. The hydraulic control device for a vehicle power transfer device according to any one of claims 1 to 3, wherein:
the two body portions include a first body portion and a second body portion, both of which are made of a synthetic resin;
the first body portion has a first surface and a first groove formed in the first surface;
the second body portion has a second surface and a second groove formed in the second surface to face the first groove, and is stacked on the first body portion with the second surface joined to the first surface; and
the first oil passage is formed by the first groove in the first surface and the second groove in the second surface.

5. The hydraulic control device for a vehicle power transfer device according to any one of claims 1 to 4, wherein:
a plurality of the first ports are formed on a first direction side, which is one side in a direction that is orthogonal to a center axis of the valve, and a plurality of the first oil passages are disposed on the first direction side with respect to the valve;
the hydraulic control device further includes a plurality of second oil passages that communicate with a plurality of second ports formed on a second direction side, which is opposite to the first direction side with respect to the valve, and that are disposed on the second direction side with respect to the valve;
the plurality of the first oil passages are disposed side by side on the first direction side with respect to the valve along a center axis direction of the valve with portions of the first oil passages that communicate with the first ports intersecting the center axis of the valve;
the plurality of second oil passages are disposed side by side on the second direction side with respect to the valve along the center axis direction of the valve with portions of the second oil passages that communicate with the second ports intersecting the center axis of the valve; and
the first oil passages and the second oil passages are disposed alternately in the center axis direction of the valve.

6. The hydraulic control device for a vehicle power transfer device according to claim 5, wherein:
the first oil passages are disposed such that the portions of the first oil passages that communicate with the first ports are orthogonal to the center axis of the valve; and
the second oil passages are disposed such that the portions of the second oil passages that communicate with the second ports are orthogonal to the center axis of the valve.

7. The hydraulic control device for a vehicle power transfer device according to claim 5 or 6, further comprising:
a second communication oil passage that extends from the plurality of second ports toward the outer side in the radial direction of the spool, and that communicates with the plurality of second oil passages, wherein:
the second oil passages are each an oil passage that has an opening portion communicating with the second communication oil passage, that is formed by joining two body portions that have respective grooves to each other such that the grooves are aligned with each other on a stacked surface on which the body portions are stacked on each other, and that communicates with the second communication oil passage; and
an oil passage width of the second oil passages is gradually increased from the opening portion toward the stacked surface in a sectional surface that is orthogonal to a center axis of the second oil passages at the opening portion.

8. The hydraulic control device for a vehicle power transfer device according to any one of claims 5 to 7, further comprising:
a tubular sleeve provided with the hole portion which houses the spool so as to be slidable, wherein
the plurality of the first ports and the plurality of second ports are formed in an inner peripheral surface of the sleeve, and a state of communication in the sleeve is varied in accordance with a position of the spool.

9. The hydraulic control device for a vehicle power transfer device according to any one of claims 5 to 8, further comprising:
a tubular sleeve provided with the hole portion which houses the spool so as to be slidable, wherein
at least one port of the plurality of the first ports and the plurality of second ports is provided in an annular shape so as to surround the spool in a circumferential direction about a center axis of the spool.

10. The hydraulic control device for a vehicle power transfer device according to any one of claims 5 to 9, further comprising:
a first layer that has a first separation surface provided on the first direction side, a second separation surface provided on the second direction side, a plurality of the hole portions formed along the first separation surface and the second separation surface between the first separation surface and the second separation surface to house the valve, the first communication oil passage, a plurality of first grooves formed in the first separation surface to communicate with the first ports through the first communication oil passage, the second communication oil passage, and a plurality of second grooves formed in the second separation surface to communicate with the second ports through the second communication oil passage;
a second layer that has a third separation surface that faces the first separation surface of the first layer and a plurality of third grooves formed in the third separation surface to face the first grooves, the plurality of the first oil passages being formed by the first grooves and the third grooves with the third separation surface stacked so as to face the first separation surface of the first layer; and
a third layer that has a fourth separation surface that is stacked on an opposite side of the first layer from the second layer and that faces the second separation surface of the first layer and a plurality of fourth grooves formed in the fourth separation surface to face the second grooves, the plurality of second oil passages being formed by the second grooves and the fourth grooves with the fourth separation surface stacked so as to face the second separation surface of the first layer.

11. The hydraulic control device for a vehicle power transfer device according to claim 10, wherein
the hole portions of the first layer open on one side in a direction along the center axis of the valve.

12. The hydraulic control device for a vehicle power transfer device according to claim 10, wherein:
the valve is a linear solenoid valve that has a pressure regulation section that regulates a hydraulic pressure using the spool and a solenoid portion that drives the pressure regulation section in accordance with an electric signal; and
the hole portions of the first layer which are disposed adjacent to each other open in a staggered manner on one side and the other side in a direction along the center axis of the valve.

13. The hydraulic control device for a vehicle power transfer device according to claim 12, further comprising:
a source pressure valve that regulates a source pressure to be supplied to the linear solenoid valve.

14. The hydraulic control device for a vehicle power transfer device according to any one of claims 1 to 13, wherein
the valve is a valve in which different hydraulic pressures can act on two adjacent first ports.

15. The hydraulic control device for a vehicle power transfer device according to claim 14, wherein:
the valve is a switching valve that can output a hydraulic pressure supplied to the first port switchably from a plurality of other different ports.
